# EUROPEAN PATENT SPECIFICATION

(11) **EP 4 351 211 B1**
(45) Date of publication and mention of the grant of the patent: **27.08.2025**
(21) Application number: 21948203.1
(22) Date of filing: 31.12.2021
(51) Int. Cl.: H04W 36/00, H04W 36/12

(54) **NETWORK HANDOVER METHOD AND SYSTEM, AND RELATED DEVICE**
NETZWERKÜBERGABEVERFAHREN UND -SYSTEM SOWIE ZUGEHÖRIGE VORRICHTUNG
PROCÉDÉ ET SYSTÈME DE TRANSFERT INTERCELLULAIRE DE RÉSEAU, ET DISPOSITIF ASSOCIÉ

(30) Priority: 29.06.2021 CN 202110725522
(43) Date of publication of application: 10.04.2024
(73) Proprietor: Huawei Technologies Co., Ltd., Longgang Shenzhen, Guangdong 518129 (CN)
(72) Inventor: ZHANG, Jian, Shenzhen, Guangdong 518129 (CN); WANG, Haipeng, Shenzhen, Guangdong 518129 (CN); WANG, Man, Shenzhen, Guangdong 518129 (CN)
(74) Representative: Pfenning, Meinig & Partner mbB
(86) International application number: PCT/CN2021/143932
(87) International publication number: WO 2023/273281

(56) References cited:
- WO-A1-2020/165665
- WO-A1-2021/013122
- WO-A1-2021/161276
- CN-A- 109 429 274
- CN-A- 111 182 543
- CN-A- 111 587 601
- CN-A- 112 291 820
- CN-A- 113 473 562
- US-A1- 2018 317 134
- US-A1- 2020 314 701
- US-A1- 2020 314 701
- ERICSSON, NOKIA, NOKIA SHANGHAI BELL, QUALCOMM INCORPORATED, AT&T: "Introducing support for Non-Public Networks", 3GPP DRAFT; S2-1901574_WAS1391_VLAN-23501-CAG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Tenerife, Spain; 20190225 - 20190301, 19 February 2019 (2019-02-19), Mobile Competence Centre ; 650, route des Lucioles ; F-06921 Sophia-Antipolis Cedex ; France , XP051610180
- "3rd Generation Partnership Project; Technical Specification Group Services and System Aspects; Study on management of Non-Public Networks (NPN); (Release 17)", 3GPP STANDARD; TECHNICAL REPORT; 3GPP TR 28.807, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V17.0.0, 16 December 2020 (2020-12-16), Mobile Competence Centre ; 650, route des Lucioles ; F-06921 Sophia-Antipolis Cedex ; France , pages 1 - 20, XP051975291

## Description

### TECHNICAL FIELD

This application relates to the field of communication technologies, and in particular, to a network handover method, a system, and a related device.

### BACKGROUND

With rapid development of mobile communication, the differentiation of network service requirements becomes more obvious. To meet different types of network service requirements, a physical network is divided at an end-to-end layer to form a network slice (Network Slice). In a 5G (5th Generation, 5th generation) network, network slices may be classified into a plurality of types such as enhanced mobile broadband (enhanced Mobile Broadband, eMBB), ultra-reliable and low-latency communication (Ultra-Reliable and Low-Latency Communication, URLLC), and massive internet of things (Massive Internet of Things, MIoT), to provide different types of network service capabilities. The network slice includes one or more network slice subnets (Network Slice Subnets), for example, a radio access network (Radio Access Network, RAN) network slice subnet, a transport network (Transport Network, TN) network slice subnet, and/or a core network (Core Network, CN) network slice subnet.

With the development of a network slicing technology and an industry private network, performance assurance of network slicing and the industry private network becomes increasingly important. For user equipment (user) that accesses a network slice needs to be handed over between different network slices, different base stations, and/or different serving cells due to location movement, insufficient resources allocated to the network slice, and the like. In a conventional method for performing network handover by UE, a source base station in a radio access network determines a target serving cell to which the UE needs to be handed over, and the target serving cell and a source serving cell may be provided by a same base station or different base stations. The source base station selects the target serving cell and/or a target base station based on factors such as a radio condition (for example, reference signal received power measured by the UE) of the UE or load balancing. However, in a conventional network handover method, the target base station or the target cell determined by the source base station may not meet a service requirement of the network slicing or the industry private network.

US2018317134A1 discloses a system for managing a network comprising at least one network slice instance including at least one network slice subnet instance. The system comprises a network slice management function associated with each network slice instance, the network slice management function configured to manage its associated network slice instance; and a network slice subnet management function associated with each network slice subnet instance, the network slice management function configured to manage its associated network slice subnet instance.

### SUMMARY

The invention is defined by the subject matter of the independent claims. Further embodiments of the invention are defined in the dependent claims. Embodiments of this application provide a network slice, a network slice subnet management method, a system, and a related device, so that handover can not only meet a requirement of a source network slice.

According to a first aspect, this application provides a network slice management method. In the method, a source network slice management function device sends a resource request to a target network slice management function device, where the resource request carries information about a source network slice subnet, and the resource request is used to request to provide a resource in a target network slice subnet. The source network slice management function device receives a response to the resource request sent by the target network slice management function device, where the response to the resource request includes information about the target network slice subnet, the information about the target network slice subnet includes information about a target base station, information about a target cell, and an identifier of the target network slice subnet, and the information about the target network slice subnet is determined based on the information about the source network slice subnet. The source network slice management function device sends a handover configuration message to a source network slice subnet management function device, where the handover configuration message includes the information about the target network slice subnet, and the information about the target network slice subnet is used to indicate the source network slice subnet management function device to trigger a source base station to hand over to-be-handed-over user equipment from a cell covered by the source base station to a cell that is covered by the target base station in the target network slice subnet indicated by the identifier of the target network slice subnet. According to this method, the target network handover subnet is determined based on the information about the source network slice subnet. Therefore, a service obtained by user equipment after the user equipment is handed over to the target network slice subnet can meet a requirement of the source network slice subnet before the handover.

In a possible design, the resource request further carries a service level agreement SLA requirement of a source network slice and/or a performance requirement of the source network slice subnet, and the SLA requirement of the source network slice and/or the performance requirement of the source network slice subnet are/is used to determine a performance requirement of the target network slice subnet. The response to the resource request further includes a quantity of resources provided by the target cell and/or a performance assurance capability provided by the target cell that are/is determined based on the performance requirement of the target network slice subnet, where the performance assurance capability provided by the target cell includes a throughput capability, a packet loss rate capability, a delay capability, and/or a delay jitter capability. The handover configuration message further includes the quantity of resources provided by the target cell and/or the performance assurance capability provided by the target cell, and the quantity of resources provided by the target cell and/or the performance assurance capability provided by the target cell are/is used by the target base station to determine the resource provided in the target network slice subnet. According to this method, the resource provided by the target network slice subnet can meet a performance requirement of the source network slice subnet before the to-be-handed-over user equipment is handed over, to ensure service experience of the user equipment after the network handover.

In a possible design, the resource request further carries a requirement for the resource provided by the target network slice subnet, and the requirement for the resource provided by the target network slice subnet includes a requirement for a quantity of resources provided by the target network slice subnet, a requirement for a time period of the resource provided by the target network slice subnet, a requirement for service traffic provided by the target network slice subnet, and/or a requirement for a carrier frequency provided by the target network slice subnet. The requirement for the resource provided by the target network slice subnet is used to request a capability of a resource provided by the target cell and/or the target base station, and the capability of the resource provided by the target cell and/or the target base station includes: a capability of a quantity of uplink and/or downlink resources provided by the target cell and/or the target base station, a capability of service traffic provided by the target cell and/or the target base station, a capability of a time period of a resource provided by the target cell and/or the target base station, and a capability of a carrier frequency provided by the target cell and/or the target base station. The response to the resource request further includes the capability of the resource provided by the target cell and/or the target base station, the capability of the resource provided by the target cell and/or the target base station is determined based on the requirement for the resource provided by the target network slice subnet, and the capability of the resource provided by the target cell and/or the target base station includes: the capability of the quantity of uplink and/or downlink resources provided by the target cell and/or the target base station, the capability of the service traffic provided by the target cell and/or the target base station, the capability of the time period of the resource provided by the target cell and/or the target base station, and the capability of the carrier frequency provided by the target cell and/or the target base station. The handover configuration message further includes a capability of a resource provided by the target cell in the target network slice subnet. A capability of the resource provided by the target cell in the target network slice subnet is used by the target base station to determine the resource provided by the target cell in the target network slice subnet. According to this method, the resource provided by the target network slice subnet can meet a performance requirement of the source network slice subnet before the to-be-handed-over user equipment is handed over, to ensure service experience of the user equipment after the network handover.

In a possible design, the resource request further carries information about to-be-handed-over user equipment, and the information about the to-be-handed-over user equipment is used to determine a correspondence between the to-be-handed-over user equipment and the target base station and/or a correspondence between the to-be-handed-over user equipment and the target cell. The response to the resource request further includes a correspondence between the to-be-handed-over user equipment and the target base station and/or a correspondence between the to-be-handed-over user equipment and the target cell. The handover configuration message further includes the correspondence between the to-be-handed-over user equipment and the target base station and/or the correspondence between the to-be-handed-over user equipment and the target cell, where the correspondence between the to-be-handed-over user equipment and the target base station and/or the correspondence between the to-be-handed-over user equipment and the target cell are/is used to indicate to hand over the to-be-handed-over user equipment from the source base station and/or a source cell to the target base station and/or the target cell. According to this method, a target base station to which the to-be-handed-over user equipment is handed over is determined based on the information about the user equipment, so that the target base station is allocated to the to-be-handed-over user equipment more properly, and resource allocation provided by the target network slice subnet in a handover process is more proper.

In a possible design, the resource request further carries quality of service information of the to-be-handed-over user equipment, and the quality of service information of the to-be-handed-over user equipment is used to determine a quantity of resources provided by the target base station or the target cell for the to-be-handed-over user equipment. The correspondence between the to-be-handed-over user equipment and the target base station is a correspondence between the target base station, the to-be-handed-over user equipment, and a quantity of resources provided by the target base station for the to-be-handed-over user equipment, and the correspondence between the target base station, the to-be-handed-over user equipment, and the quantity of resources provided by the target base station for the to-be-handed-over user equipment is used to indicate the quantity of resources provided by the target base station for the to-be-handed-over user equipment. According to the method, resources after the handover are allocated to the user equipment based on the quality of service information of the user equipment, so that the quality of service of the user equipment can be ensured.

In a possible design, the resource request further carries a handover cause, and the handover cause is used to determine whether to provide the resource of the target network slice subnet for the to-be-handed-over user equipment. According to this method, the resource request carries the handover cause, so that the target network slice management function device determines whether to provide a resource more properly.

In a possible design, the network slice management function device receives resource utilization and/or a performance indicator of the source network slice subnet. The network slice management function device determines, based on the resource utilization and/or the performance indicator of the source network slice subnet and a preset condition of the resource utilization and/or a preset condition of the performance indicator, a handover policy for handing over the to-be-handed-over user equipment from the source network slice subnet to the target network slice subnet, where the handover policy includes content carried in the resource request. According to this method, the network slice management function device determines the handover policy based on the resource utilization and/or the performance indicator of the source network slice subnet, so that the handover policy is more properly determined.

In a possible design, the handover configuration message further includes the handover cause. The handover cause is used to indicate the source base station to determine whether to trigger to-be-handed-over user equipment that accesses the source network slice subnet to be handed over to the target network slice subnet through the target base station. According to this method, the resource request carries the handover cause, so that the source base station determines whether to provide a resource more properly.

In a possible design, the sending a resource request to a target network slice management function device includes: sending the resource request to the target network slice management function device based on a network deployment requirement of the source network slice, resource planning of the source network slice, and/or a service peak resource requirement loaded to the source network slice.

In a possible design, the source network slice management function device sends the resource request via a source communication service management function device and a target communication service management function device, and receives the response to the resource request.

Alternatively, the source network slice management function device sends the resource request to a target communication service management function device, and receives the response to the resource request sent by the target communication service management function device.

Alternatively, the source network slice subnet management function device sends the resource request to a target communication service management function device, and receives the response to the resource request sent by the target communication service management function device.

According to a second aspect, an embodiment of this application provides a network handover method, applied to a target network slice management function device. The method includes: A target network slice management function device receives a resource request, where the resource request carries information about a source network slice subnet, and the resource request is used to request to provide a resource in a target network slice subnet. Then, the target network slice management function device determines information about the target network slice subnet based on the information about the source network slice subnet, where the information about the target network slice subnet includes information about a target base station, information about a target cell, and an identifier of the target network slice subnet. Then, the target network slice management function device sends a response to the resource request, where the response to the resource request includes the information about the target network slice subnet, and the information about the target network slice subnet is used to indicate a source network slice subnet management function device to trigger a source base station to hand over to-be-handed-over user equipment from a cell covered by the source base station to a cell that is covered by the target base station in the target network slice subnet indicated by the identifier of the target network slice subnet. According to this method, the target network handover subnet is determined based on the information about the source network slice subnet. Therefore, a service obtained by user equipment after the user equipment is handed over to the target network slice subnet can meet a requirement of the source network slice subnet before the handover.

In a possible design, the resource request further carries a service level agreement SLA requirement of the source network slice and/or a performance requirement of the source network slice subnet. The target network handover management device further determines a performance requirement of the target network slice subnet based on the SLA requirement of the source network slice and/or the performance requirement of the source network slice subnet, and sends a resource requirement request to the target network slice subnet management function device, where the resource requirement request carries the performance requirement of the target network slice subnet. Then, the target network handover management device receives a response to the resource requirement request sent by the target network slice subnet management function device, where the response to the resource requirement request includes a quantity of resources provided by the target base station and/or a performance assurance capability provided by the target base station that are determined based on the performance requirement of the target network slice subnet, and the performance assurance capability provided by the target cell includes a throughput capability, a packet loss rate capability, a delay capability, and/or a delay jitter capability. The response to the resource request further includes: a quantity of resources provided by the target cell and/or a performance assurance capability provided by the target cell. According to this method, the resource provided by the target network slice subnet can meet a performance requirement of the source network slice subnet before the to-be-handed-over user equipment is handed over, to ensure service experience of the user equipment after the network handover.

In a possible design, the resource request further carries a requirement of the source network slice subnet for a resource provided by the target network slice subnet, and the requirement for the resource provided by the target network slice subnet includes a requirement for a quantity of resources provided by the target network slice subnet, a requirement for a time period of the resource provided by the target network slice subnet, a requirement for service traffic provided by the target network slice subnet, and/or a requirement for a carrier frequency provided by the target network slice subnet. The target network slice management device further sends a resource requirement request to the target network slice subnet management function device, where the resource requirement request includes the requirement for the resource provided by the target network slice subnet, the requirement for the resource provided by the target network slice subnet is used to request a requirement of a resource provided by the target cell and/or the target base station, and the requirement for the resource provided by the target cell and/or the target base station includes: a requirement of a quantity of uplink and/or downlink resources provided by the target cell and/or the target base station, a requirement of service traffic provided by the target cell and/or the target base station, a requirement of a time period of a resource provided by the target cell and/or the target base station, and a requirement of a carrier frequency provided by the target cell and/or the target base station.

The target network slice management device further receives a response to the resource requirement request sent by the target network slice subnet, where the response to the resource requirement request includes a capability of a resource provided by the target cell and/or the target base station in the target network slice subnet, and the capability of the resource provided by the target cell and/or the target base station in the target network slice subnet is determined based on the requirement for the resource provided by the target network slice subnet; and the capability of the resource provided by the target cell and/or the target base station in the target network slice subnet includes: a capability of the quantity of uplink and/or downlink resources provided by the target cell and/or the target base station, a capability of the service traffic provided by the target cell and/or the target base station, a capability of the time period of the resource provided by the target cell and/or the target base station, and a capability of the carrier frequency provided by the target cell and/or the target base station. The response to the resource request further includes the capability of the resource provided by the target cell in the target network slice subnet, and the capability of the resource provided by the target cell in the target network slice subnet is used by the target base station to determine the resource provided by the target cell in the target network slice subnet. According to this method, the resource provided by the target network slice subnet can meet a performance requirement of the source network slice subnet before the to-be-handed-over user equipment is handed over, to ensure service experience of the user equipment after the network handover.

In a possible design, the resource request further carries information about to-be-handed-over user equipment. The target network slice management device further sends a resource requirement request to the target network slice subnet management function device, where the resource requirement request includes information about the to-be-handed-over user equipment, and the information about the to-be-handed-over user equipment is used to determine a correspondence between the to-be-handed-over user equipment and the target base station and/or a correspondence between the to-be-handed-over user equipment and the target cell. The target network slice management device receives a response to the resource requirement request sent by the target network slice subnet management function device, where the response to the resource requirement request further includes the correspondence between the to-be-handed-over user equipment and the target base station and/or the correspondence between the to-be-handed-over user equipment and the target cell. The response to the resource request further includes the correspondence between the to-be-handed-over user equipment and the target base station and/or the correspondence between the to-be-handed-over user equipment and the target cell. According to this method, a target base station to which the to-be-handed-over user equipment is handed over is determined based on the information about the user equipment, so that the target base station is allocated to the to-be-handed-over user equipment more properly, and resource allocation provided by the target network slice subnet in a handover process is more proper.

In a possible design, the resource request further carries quality of service information of the to-be-handed-over user equipment. The resource requirement request further includes quality of service information of the to-be-handed-over user equipment, and the quality of service information of the to-be-handed-over user equipment is used to determine a quantity of resources provided by the target base station for the to-be-handed-over user equipment. The correspondence between the to-be-handed-over user equipment and the target base station is a correspondence between the target base station, the to-be-handed-over user equipment, and a quantity of resources provided by the target base station for the to-be-handed-over user equipment, and the correspondence between the target base station, the to-be-handed-over user equipment, and the quantity of resources provided by the target base station for the to-be-handed-over user equipment is used to indicate the quantity of resources provided by the target base station for the to-be-handed-over user equipment. According to the method, resources after the handover are allocated to the user equipment based on the quality of service information of the user equipment, so that the quality of service of the user equipment can be ensured.

According to a third aspect, an embodiment of this application provides a network handover method, applied to a target network slice subnet management function device. In the method, the target network slice subnet management function device receives a resource requirement request sent by a target network slice management function device, where the resource requirement request carries determined information about a target network slice subnet, the information about the target network slice subnet includes an identifier of the target network slice subnet, information about a target base station, and information about a target cell, and the information about the target network slice subnet is determined based on information about a source network slice subnet. The target network slice subnet management function device sends a response to the resource requirement request, where the response to the resource requirement request carries the information about the target network slice subnet, and the information about the target network slice subnet is used to indicate a source network slice subnet management function device to trigger a source base station to hand over to-be-handed-over user equipment from a cell covered by the source base station to a cell that is covered by the target base station in the target network slice subnet indicated by the identifier of the target network slice subnet. According to this method, the target network handover subnet is determined based on the information about the source network slice subnet. Therefore, a service obtained by user equipment after the user equipment is handed over to the target network slice subnet can meet a requirement of the source network slice subnet before the handover.

In a possible design, the resource requirement request further carries a performance requirement of the target network slice subnet. The target network slice subnet management function device further determines a quantity of resources provided by the target cell and/or a performance assurance capability provided by the target cell based on the performance requirement of the target network slice subnet, where the performance assurance capability provided by the target cell includes a throughput capability, a packet loss rate capability, and/or a delay capability. The response to the resource requirement request further carries a quantity of resources provided by the target base station and/or a performance assurance capability provided by the target base station, and the quantity of resources provided by the target cell and/or the performance assurance capability provided by the target cell are/is used by the target base station to determine a resource provided in the target network slice subnet. According to this method, the resource provided by the target network slice subnet can meet a performance requirement of the source network slice subnet before the to-be-handed-over user equipment is handed over, to ensure service experience of the user equipment after the network handover.

In a possible design, the resource requirement request further carries a requirement for a resource provided by the target network slice subnet, and the requirement for the resource provided by the target network slice subnet includes a requirement for a quantity of resources provided by the target network slice subnet, a requirement for a time period of the resource provided by the target network slice subnet, a requirement for service traffic provided by the target network slice subnet, and/or a requirement for a carrier frequency provided by the target network slice subnet. The target network slice subnet management function device further determines, based on the requirement for the resource provided by the target network slice subnet, a capability of a resource provided by the target cell and/or the target base station, and the capability of the resource provided by the target cell and/or the target base station includes: a capability of a quantity of uplink and/or downlink resources provided by the target cell and/or the target base station, a capability of service traffic provided by the target cell and/or the target base station, a capability of a time period of the resource provided by the target cell and/or the target base station, and a capability of a carrier frequency provided by the target cell and/or the target base station. The response to the resource requirement request further carries the capability of the resource provided by the target cell and/or the target base station, and the capability of the resource provided by the target cell and/or the target base station is used by the target base station to determine a resource provided by the target cell in the target network slice subnet. According to this method, the resource provided by the target network slice subnet can meet a performance requirement of the source network slice subnet before the to-be-handed-over user equipment is handed over, to ensure service experience of the user equipment after the network handover.

In a possible design, the resource requirement request further carries information about to-be-handed-over user equipment. The network slice subnet management function device further determines a correspondence between the to-be-handed-over user equipment and the target base station and/or a correspondence between the to-be-handed-over user equipment and the target cell based on the information about the to-be-handed-over user equipment. The response to the resource requirement request further carries the correspondence between the to-be-handed-over user equipment and the target base station and/or the correspondence between the to-be-handed-over user equipment and the target cell. According to this method, a target base station to which the to-be-handed-over user equipment is handed over is determined based on the information about the user equipment, so that the target base station is allocated to the to-be-handed-over user equipment more properly, and resource allocation provided by the target network slice subnet in a handover process is more proper.

In a possible design, the resource requirement request further carries quality of service information of the to-be-handed-over user equipment. The network slice subnet management function device further determines, based on the quality of service information of the to-be-handed-over user equipment, the quantity of resources provided by the target base station for the user equipment. The correspondence between the to-be-handed-over user equipment and the target base station is a correspondence between the target base station, the to-be-handed-over user equipment, and a quantity of resources provided by the target base station for the to-be-handed-over user equipment. According to the method, resources after the handover are allocated to the user equipment based on the quality of service information of the user equipment, so that the quality of service of the user equipment can be ensured.

According to a fourth aspect, this application provides a network slice management function device. The device includes a functional module configured to perform any method in the first aspect or the second aspect. Division of the functional module is not limited in this application. The functional module may be correspondingly divided based on the procedure steps of the network handover method in the first aspect or the second aspect, or the functional module may be divided based on a specific implementation requirement. In an example, the device includes a receiving module, a processing module, a sending module, and/or the like. The functional module may be implemented by hardware, or may be implemented by hardware by executing corresponding software.

According to a fifth aspect, this application provides a network slice subnet management function device. The device includes a functional module configured to perform the third aspect. Division of the functional module is not limited in this application. The functional module may be correspondingly divided based on the procedure steps of the network handover method in the third aspect, or the functional module may be divided based on a specific implementation requirement. In an example, the device includes a receiving module, a processing module, a sending module, and/or the like. The functional module may be implemented by hardware, or may be implemented by hardware by executing corresponding software.

According to a sixth aspect, this application provides a network slice management function device. The device includes a memory and at least one processor, the memory stores program code, and the processor invokes the program code to perform any method in the first aspect or the second aspect. The device may further include a communication interface, configured to communicate with another device.

According to a seventh aspect, this application provides a network slice subnet management function device. The device includes a memory and at least one processor, the memory stores program code, and the processor invokes the program code to perform the method in the third aspect. The device may further include a communication interface, configured to communicate with another device.

According to an eighth aspect, this application provides a network slice management system. The system includes a network slice management function device and a network slice subnet management function device. The network slice management function device is a device that performs the method in the first aspect. The network slice subnet management function device is configured to: receive a first handover configuration message sent by the network slice management function device, where the first handover configuration message carries information about a target network slice subnet; and send a second handover configuration message to a source base station based on the first handover configuration message.

Optionally, the system further includes one or more source base stations. Any one of the one or more source base stations is configured to receive the second handover configuration message, and send a network handover request to a target base station based on the second handover configuration message.

According to a ninth aspect, this application provides a network slice management system. The system includes a network slice management function device and a network slice subnet management function device. The network slice management function device is a device that performs the method in the second aspect, and is a device that performs the method in the third aspect.

According to a tenth aspect, this application provides a computer-readable storage medium. The readable storage medium stores instructions. When the instructions are run, a device (for example, a network slice management function device) that runs the instructions can implement any method in the first aspect or the second aspect of this application.

According to an eleventh aspect, this application provides a computer-readable storage medium. The readable storage medium stores instructions. When the instructions are run, a device (for example, a network slice management function device) that runs the instructions can implement any method in the third aspect of this application.

According to a twelfth aspect, this application provides a network handover method. The method includes: A source base station receives second handover configuration information, where the second handover configuration information includes information about a target network slice subnet, the information about the target network slice subnet includes information about a target base station, information about a target cell, and an identifier of the target network slice subnet, and the information about the target network slice subnet is determined based on information about a source network slice subnet. The source base station sends a handover instruction to the target base station based on the second handover configuration information, so that to-be-handed-over user equipment is handed over from a cell covered by the source base station to a cell that is covered by the target base station in the target network slice subnet indicated by the identifier of the target network slice subnet.

According to a thirteenth aspect, an embodiment of this application further provides a base station, including a receiving module and a sending module. The receiving module is configured to receive second handover configuration information, where the second handover configuration information includes information about a target network slice subnet, the information about the target network slice subnet includes information about a target base station, information about a target cell, and an identifier of the target network slice subnet, and the information about the target network slice subnet is determined based on information about a source network slice subnet. The sending module is configured to send a handover instruction to the target base station based on the second handover configuration information, so that to-be-handed-over user equipment is handed over from a cell covered by the source base station to a cell that is covered by the target base station in the target network slice subnet indicated by the identifier of the target network slice subnet.

According to a fourteenth aspect, an embodiment of this application further provides a base station. The device includes a memory and at least one processor, the memory stores program code, and the processor invokes the program code to perform the method in the twelfth aspect. The device may further include a communication interface, configured to communicate with another device.

According to a fifteenth aspect, this application provides a computer program product. When the computer program product runs on a computer, the computer is enabled to implement any method in the first aspect or the second aspect of this application.

According to a sixteenth aspect, this application provides a computer program product. When the computer program product runs on a computer, the computer is enabled to implement any method in the third aspect of this application.

According to a seventeenth aspect, this application provides a computer program product. When the computer program product runs on a computer, the computer is enabled to implement any method in the twelfth aspect of this application.

According to an eighteenth aspect, this application provides a chip. When the chip runs, any method in the first aspect or the second aspect of this application can be implemented.

According to a nineteenth aspect, this application provides a chip. When the chip runs, any method in the third aspect of this application can be implemented.

According to a twentieth aspect, this application provides a chip. When the chip runs, any method in the twelfth aspect of this application can be implemented.

It should be understood that designs of the aspects provided in this application may be mutually referenced. Mutual reference may also be made to beneficial effects of designs of the aspects provided in this application. Details are not described again.

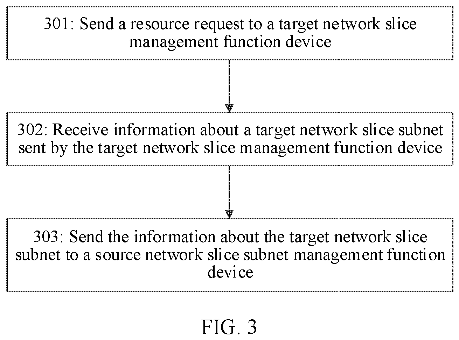

In the following description, the invention is described with particular reference to figures 3, 4 and 5, while the description of the remaining figures is provided for illustrative purposes for a better understanding of the invention.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a schematic diagram of a system architecture of a network slice management system according to an embodiment of this application;
FIG. 2A is an architectural diagram of a network deployment according to an embodiment of this application;
FIG. 2B is a schematic diagram of a system including a source network slice management system and a target network slice management system according to an embodiment of this application;
FIG. 2C is another schematic diagram of structures of a network slice management system and a network slice management system according to an embodiment of this application;
FIG. 2D is another schematic diagram of structures of a network slice management system and a network slice management system according to an embodiment of this application;
FIG. 3 is a flowchart of a network handover method according to the invention;
FIG. 4 is another flowchart of a network handover method according to the invention;
FIG. 5 is still another flowchart of a network handover method according to the invention;
FIG. 6 is another schematic diagram of structures of a source network slice management function device, a source base station, a target network slice management function device, and a target network slice subnet management function device according to an embodiment of this application;
FIG. 7 is another schematic diagram of a structure of a source network slice management function device according to an embodiment of this application;
FIG. 8 is another schematic diagram of a structure of a target network slice management function device according to an embodiment of this application;
FIG. 9 is another schematic diagram of a structure of a target network slice subnet management function device according to an embodiment of this application; and
FIG. 10 is a schematic diagram of a structure of a base station according to an embodiment of this application.

### DESCRIPTION OF EMBODIMENTS

The following describes embodiments of this application with reference to the accompanying drawings in embodiments of this application.

This application may be applicable to a 5th generation (5G) mobile communication network architecture or a future network, and may be used for handover of a terminal between network slices.

For ease of understanding this application, some concepts related to a network slicing technology are first described herein.

A network slice refers to a logical network that is customized based on different service requirements and has different network capabilities and network features on a physical or virtual network infrastructure. The network slice may be a complete end-to-end network including a terminal, a RAN, a TN, a CN, and an application server, can provide a communication service, and has a specific network capability. Alternatively, the network slice may be any combination of the foregoing terminal, the RAN, the TN, the CN, and the application server. For example, the network slice includes only the RAN and the CN.

Network slice subnet: A network slice subnet is a logical network formed by combining and configuring several network functions and corresponding network resources, and can provide a network service. The network slice subnet is an integral part of the network slice.

A network slice instance (Network Slice Instance, NSI) is an actually deployed logical network that can meet a specific network feature or service requirement. One network slice instance may provide one or more types of services. One network slice instance may provide a complete end-to-end network service, and the network slice instance may be formed by a network slice subnet instance (Network Slice Subnet Instance, NSSI) and/or a network function. Network functions may include physical and/or virtual network functions. The physical network function and/or the virtual network function are hereinafter collectively referred to as the network function.

Network slice subnet instance: The network slice subnet instance may not need to provide a complete end-to-end network service. The network slice subnet instance may be a set of network functions of a same vendor in the network slice instance, or may be a set of network functions divided by domain, for example, a CN network slice subnet instance, a RAN network slice subnet instance, or a set formed in another manner. One network slice instance may include several network slice subnet instances, and each network slice subnet instance includes several network functions and/or several network slice subnet instances. One network slice instance may include several network slice subnet instances and a network function that has not been grouped into a network slice subnet instance; or one network slice instance may include only several network functions.

The communication service is a combination of a communication capability that is covered by an end-to-end network or network slice for a user to meet a specific service requirement and a corresponding management capability.

A communication service instance is a communication service of a predefined group of users (a defined group of users) in a running state.

A non-public network is a network that is independent of a PLMN network or shares a PLMN network relative to a PLMN network owned and operated by an operator.

Closed access group: In a PNI-NPN, a RAN and AMF perform access control and mobility management based on a CAG ID. In the PNI-NPN, only UE in the CAG can access a network.

Non-public network (Non-Public Network, NPN, also referred to as an industry private network): The NPN mainly includes two types: a stand-alone non-public network SNPN (Stand-alone Non-Public Network) and a public network integrated non-public network (Public network Integrated NPN, PNI-NPN). The SNPN is operated by an NPN operator (or an industry tenant) and does not depend on a network function provided by a public land mobile network (Public Land Mobile Network, PLMN). The PNI-NPN refers to deploying a non-public network supported by the PLMN. In the PNI-NPN, the industry tenant and a PLMN operator can share the RAN, a CN user plane, and/or a CN control plane, and operate and manage based on 5G network slicing. Based on different sharing manners, the PNI-NPN may be used as a network slice or a network slice subnet. For the PNI-NPN, a PLMN ID and a close access group identifier (close access group identifier, CAG ID) are broadcast in a cell managed by a base station gNB. It indicates that the cell is a cell of the PNI-NPN. UE that is allowed to access a CAG cell is also called CAG UE. One UE may be allowed to access one or more CAG cells. The RAN/AMF performs network/cell selection, access control, and mobility management based on the CAG. Based on access control information configured by the operator, the CAG UE (a terminal user) may alternatively access the PLMN to obtain a service from a public network or be rejected to access the PLMN.

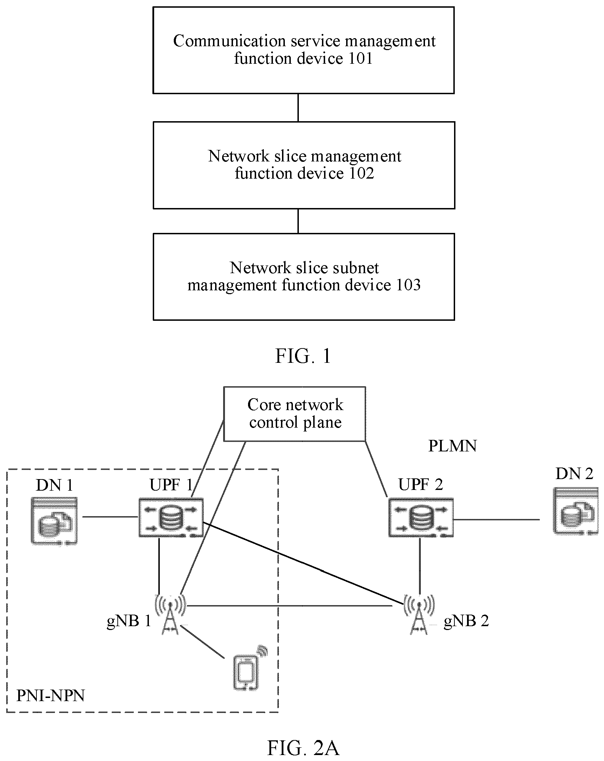

FIG. 1 is a diagram of an architecture of a system to which an embodiment of this application is applied. The following briefly describes devices in the system to which the embodiment of this application is applied and main functions of the devices. The following embodiments of this application further provide detailed descriptions. The system may include a communication service management function (Communication Service Management Function, CSMF) device 101, a network slice management function (Network Slice Management Function, NSMF) device 102, and a network slice subnet management function (Network Slice Subnet Management Function, NSSMF) device 103.

The CSMF device 101 has a function of managing a communication service, that is, provides a communication service management service. Therefore, the CSMF device 101 may also be referred to as a communication service management service producer (Communication Service Management Service Producer, CSMS Producer) or a communication service management service producer (Communication Service Management Service Producer, CSMS Producer). Specifically, the CSMF device 101 is configured to receive a communication service requirement of a user, and provide a communication service (that is, deploy a communication service instance) based on the communication service requirement. The CSMF device 101 converts the communication service requirement into a requirement for a network slice, and sends the requirement for the network slice to the NSMF device 102. The user herein may be specifically an operator and/or a third-party customer, or the like.

The NSMF device 102 has a network slice management function, that is, provides a network slice management service. Therefore, the NSMF device 102 may also be referred to as a network slice management service_provider (Network Slice Management Service_Provider, NSMS_ Provider) or a network slice management service_producer (Network Slice Management Service_Producer, NSMS_ Producer). Specifically, the NSMF device 102 is configured to receive the requirement that is for the network slice and that is sent by the CSMF device 101, and provide a network slice (that is, deploy a network slice instance) based on the requirement for the network slice.

The NSMF device 102 may be further configured to: obtain a performance assurance policy of the network slice based on the requirement for the network slice, and execute the performance assurance policy of the network slice. The NSMF device 102 may be further configured to: obtain a performance monitoring policy of the network slice based on the requirement for the network slice, and perform performance monitoring on the network slice based on the performance monitoring policy. Optionally, the NSMF device 102 is configured to execute the performance assurance policy when detecting a monitoring event in the performance monitoring policy.

The NSMF device 102 is further configured to: decompose requirements for the network slice into requirements for the network slice subnet, and send the requirement for the network slice subnet to a corresponding NSSMF device 103. The NSSMF device 103 may be a RAN NSSFM device, a CN NSSMF device, or the like. For example, the NSMF device 102 decomposes the requirements for the network slice into a requirement for a RAN network slice subnet and a requirement for a CN network slice subnet. Further, the NSMF device 102 further sends the requirement for the RAN network slice subnet to the RAN NSSMF device, and sends the requirement for the CN network slice subnet to the CN NSSMF device.

FIG. 1 shows an example of an NSSMF device. A quantity of devices in a system architecture is not limited in this application.

The NSSMF device 103 has a network slice subnet management function, that is, provides a network slice subnet management service. Therefore, the NSSMF device 103 may also be referred to as a network slice subnet management service producer (Network Slice Subnet Management Service Producer, NSSMS Producer) or a network slice management service producer (Network Slice Management Service Producer, NSMS Producer). Specifically, the NSSMF device 103 is configured to: receive the requirement that is for the network slice subnet and that is sent by the NSMF device 102, and provide a network slice subnet (that is, deploy a network slice subnet instance) based on the requirement for the network slice.

The NSSMF device 103 may be further configured to: obtain a performance assurance policy of the network slice subnet, and execute the performance assurance policy of the network slice subnet. The NSSMF device 103 may be further configured to: obtain a performance monitoring policy of the network slice subnet, and perform performance monitoring on the network slice subnet based on the performance monitoring policy of the network slice subnet.

FIG. 2A is an architectural diagram of network deployment according to an embodiment of this application. In FIG. 2A, an NPN and a PLMN use two base stations a gNB 1 and a gNB 2. The NPN and the PLMN share a control plane of a core network (such as an AMF and SMF). The NPN uses a UPF 1 and a data network DN 1. The gNB 1 and the gNB 2 provide a radio access function. The AMF (not shown in the figure) is an access and mobility management function of the core network, and is responsible for functions such as registration, access, mobility, and authentication of UE (including CAG UE). A session management function SMF is used to control establishment, deletion, or modification of a session for UE (including the CAG UE). A user plane function UPF, through which user data is transmitted to a data network DN (Data Network). The data network is a network provided for an operator service, internet access, a third-party service, or the like.

In the network deployment architecture shown in FIG. 2A, an NPN operator rents a dedicated carrier resource from a PLMN operator, and applies for an additional carrier resource as required. The gNB 1 provides the dedicated carrier resource, and only the CAG UE is allowed to access the dedicated carrier resource. The gNB 2 provides the dedicated carrier resource and the additional carrier resource, and allows access of the CAG UE and non-CAG UE (the non-CAG UE may be UE that accesses the PLMN). In a scenario shown in FIG. 2A, the CAG UE may be handed over from the gNB 1 to the gNB 2, or may be handed over from the gNB 2 to the gNB 1. For example, UE 1 is handed over from accessing a service of an industry private network to a service of a PLMN, and the UE 1 may alternatively access the service of the industry private network through the gNB 2.

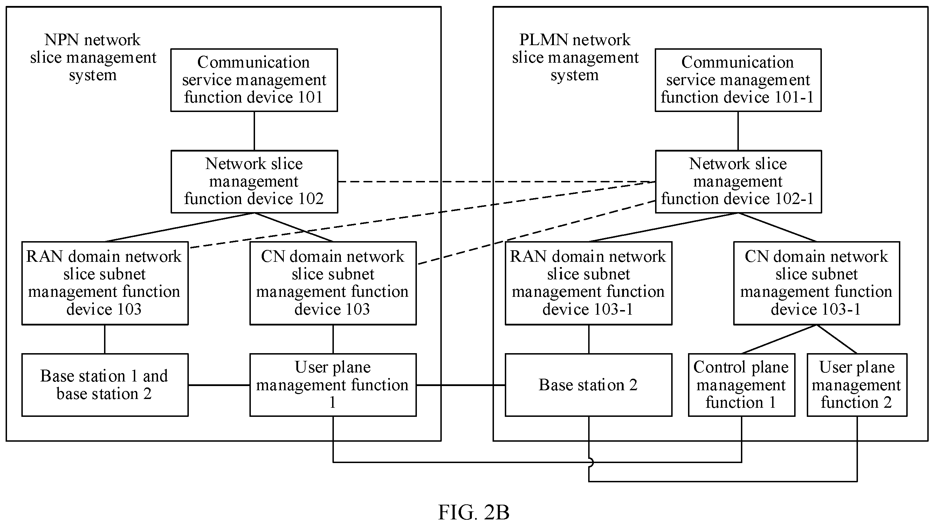

FIG. 2B is a schematic structural diagram in which a source network slice management system and a target network slice management system are in combination with a CN domain network device and a RAN domain network device that are in FIG. 2A according to an embodiment of this application. In FIG. 2B, a network slice management system includes an NPN network slice management system and a PLMN network slice management system. The NPN network slice management system includes the communication service management function device 101, the network slice management function device 102, the RAN domain network slice subnet management function device 103, and the CN domain network slice subnet management function device 103 that are shown in FIG. 1. The PLMN network slice management system includes a communication service management function device 101-1, a network slice management function device 102-2, a network slice subnet management function device 103-1, and a network slice management function device 104-1. A base station 1 is a RAN domain device managed by the RAN domain network slice subnet management function device in the NPN, and provides a radio access network side service for CAG UE that accesses the NPN. A user plane function 1 is a core network domain device managed by the CN domain network slice subnet management function device in the NPN, and provides a core network side user plane service for the CAG UE. A base station 2 is a device shared by the NPN and the PLMN, and is jointly managed by the RAN domain network slice subnet management function device 103 in the NPN and the RAN domain network slice subnet management function device in the PLMN. The base station 2 may communicate with the user plane function 1 and a user plane function 2. The user plane function 2 is a core network domain device managed by the CN domain network slice subnet management function device in the PLMN, and provides a service for the PLMN. Generally, a device managed by the NPN does not include a control plane function of a core network. The NPN generally shares the control plane function with the PLMN. Therefore, both the user plane function 1 and the user plane function 2 are controlled by a control plane function 1. The control plane function 1 is managed by the CN domain network slice subnet management function device 103-1 in the PLMN.

The NPN network slice management system shown in FIG. 2B is configured to manage a network slice and/or a network slice subnet corresponding to the NPN. The PLMN network slice management system is configured to manage a network slice and/or a network slice subnet corresponding to the PLMN. The network slice and/or the network slice subnet corresponding to the PLMN may alternatively provide a service for CAG UE covered by the NPN.

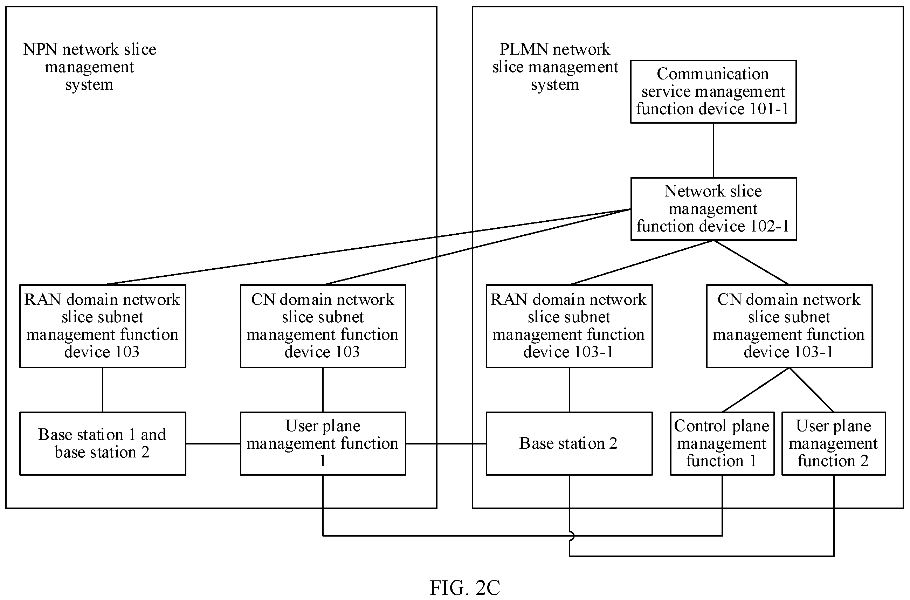

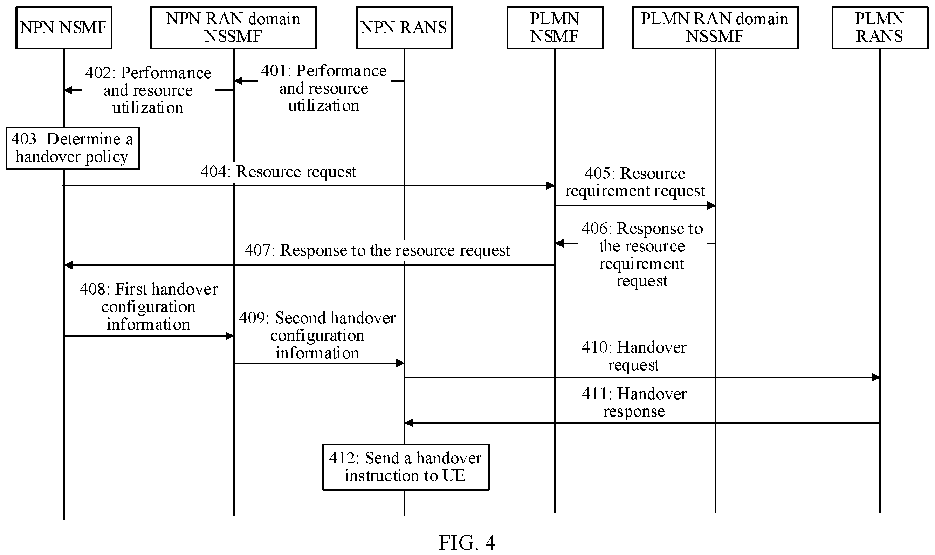

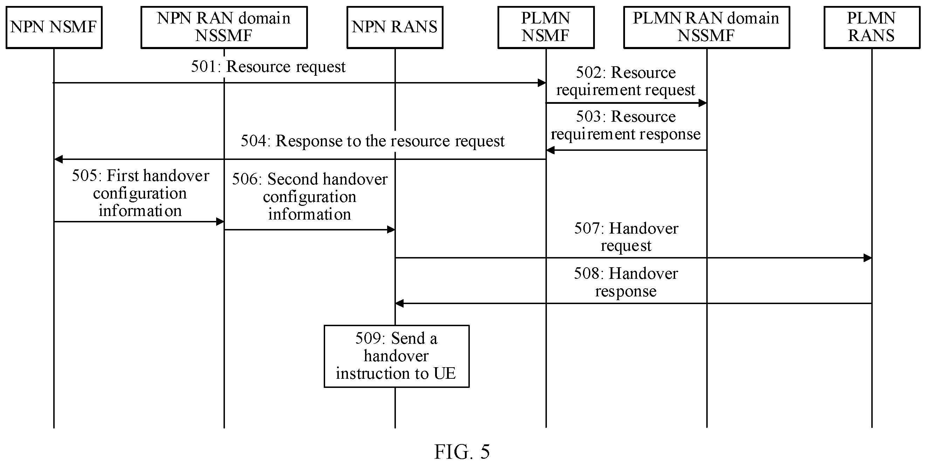

FIG. 2C is another schematic diagram of structures of a network slice management system and a network slice management system according to an embodiment of this application. Different from the schematic diagram in FIG. 2B, the NPN network slice management system in FIG. 2C does not include the communication service management function device 101 and the network slice management function device 102 shown in FIG. 1. The NPN network slice management system in FIG. 2C includes a RAN domain network slice subnet management function device 103 and a CN domain network slice subnet management function device 103. An NPN network slice subnet management function device (for example, the RAN domain network slice subnet function device 103 or the CN domain network slice subnet function device 104) in FIG. 2C communicates with a network slice management function device 102-1 in a PLMN. Other devices and functions included in the NPN network slice management system in FIG. 2C are the same as those in FIG. 2B. Details are not described in this embodiment of this application again. Devices and functions included in the PLMN network slice management system in FIG. 2C are also the same as those in FIG. 2B. Details are not described in this embodiment of this application again. In FIG. 2C, the RAN domain network slice subnet management function device in the NPN may perform steps 403, 404, 407, 408, 501, 504, and 505 performed by network slice management function devices in FIG. 4 and FIG. 5 to communicate with a PLMN NSMF.

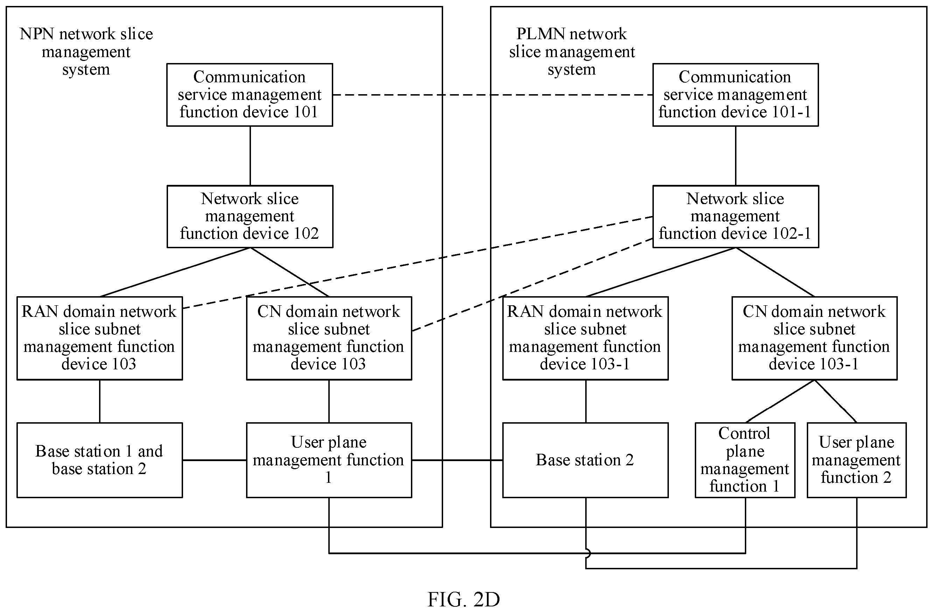

FIG. 2D is another schematic diagram of structures of a network slice management system and a network slice management system according to an embodiment of this application. Different from the schematic diagram in FIG. 2B, a communication service management function device 101 in an NPN network slice management system in FIG. 2D may communicate with a communication service management function device in a PLMN network slice management system. With reference to the following embodiments in FIG. 4 and FIG. 5, a resource request and a response to the resource request are sent or received by the communication service management function device 101 in the NPN network slice management system and the communication service management function device in the PLMN network slice management system.

FIG. 3 is a flowchart of a network handover method according to an embodiment of this application. The method procedure is implemented based on the schematic structural diagrams shown in FIG. 2A to FIG. 2D. The network handover method is a method for handing over user equipment that accesses a source network slice subnet to a target network slice subnet. A source network slice may be an NPN network slice, or may be a PLMN network slice. A target network slice is usually a PLMN network slice that can provide a resource for another network slice.

With reference to FIG. 2A, FIG. 2B, FIG. 2C, or FIG. 2D, a source network slice management function device may be an NPN network slice management function device 102. A source network slice subnet management function device may be an NPN RAN domain NSSMF device, or may be a PLMN RAN domain NSSMF device. A target network slice management function device may be a PLMN network slice management function device, and a target network slice subnet management function device may be a PLMN RAN domain network slice subnet management function device. In another implementation, the method shown in FIG. 3 includes the following steps.

Step 301: A source network slice function management function device sends a resource request to a target network slice management function device, where the resource request carries information about the source network slice subnet, and the resource request is used to request to provide a resource in the target network slice subnet.

After receiving resource utilization and/or a performance indicator of the source network slice subnet, the source network slice function management function device determines, based on the resource utilization and/or the performance indicator of the source network slice subnet and a preset condition of the resource utilization and/or a preset condition of the performance indicator, a handover policy for handing over to-be-handed-over user equipment in the source network slice subnet to the target network slice subnet. Then, the resource request is sent to the target network slice management function device. The handover policy includes content carried in the resource request. Optionally, the source network slice management function device sends the resource request to the target network slice management function device based on a network deployment requirement of the source network slice, resource planning of the source network slice, and/or a service peak resource requirement loaded to the source network slice.

Step 302: The source network slice management function device receives a response to the resource request sent by the target network slice management function device, where the response to the resource request includes information about the target network slice subnet. The information about the target network slice subnet includes information about a target base station, information about a target cell (that is, a cell that is covered by the target base station and that is related to the target network slice subnet), and/or an identifier of the target network slice subnet. The information about the target network slice subnet is determined based on the information about the source network slice subnet.

Step 303: The source network slice management function device sends a handover configuration message to the source network slice subnet management function device, where the handover configuration message includes the information about the target network slice subnet, and the information about the target network slice subnet is used to indicate the source network slice subnet management function device to trigger a source base station to hand over the to-be-handed-over user equipment from a cell covered by the source base station to a cell that is covered by the target base station in the target network slice subnet indicated by the identifier of the target network slice subnet.

According to the foregoing embodiment, the target network slice subnet is determined, so that the user equipment that accesses the source network slice subnet is handed over to the target base station in the target network slice subnet. Therefore, handed-over user equipment can enjoy network quality of the target network slice subnet, to ensure quality of service of the user equipment after the network slice.

FIG. 4 is a network handover method according to an embodiment of this application. The method procedure is implemented based on any one of the schematic structural diagrams shown in FIG. 2A to FIG. 2D. An NPN NSMF corresponds to the NPN network slice management function device 102 in FIG. 2B, an NPN RAN domain NSSMF device corresponds to the RAN domain network slice subnet management function device 103 in FIG. 2B, and NPN RANs correspond to one or more base stations 1 in FIG. 2B. A PLMN NSMF corresponds to the network slice management function device 102-1 in the PLMN in FIG. 2B, a PLMN RAN domain NSSMF corresponds to the RAN domain network slice subdomain management function device 103-1 in FIG. 2B, and PLMN RANs correspond to one or more base stations 2 in FIG. 2B. Other devices in FIG. 2 are not shown in FIG. 4. In the method shown in FIG. 4, the NPN NSMF determines, based on performance and resource utilization provided by obtained NPN RANs, to hand over UE (for example, CAG UE and UE of another type) that accesses a network by using the NPN RANs to the PLMN RANs. The method shown in FIG. 4 includes the following steps.

Step 401: One or more NPN RANs (for example, the base station 1 in FIG. 2B) send measurement information related to a network slice to the NPN RAN domain NSSMF. The related measurement information of the network slice includes information such as a network slice identifier, performance measurement information related to a requirement of a RAN network slice subnet, and resource utilization of a network slice in a corresponding RAN.

The information sent by the NPN RAN to the NPN RAN domain NSSMF may further carry the network slice identifier, for example, single network slice selection assistance information (Single Network Slice Selection Assistant Information, S-NSSAI) or a network slice instance (Network Slice Instance, NSI) identifier (Identifier, ID).

The measurement information related to the network slice includes performance measurement information and/or measurement information of the resource utilization. The performance measurement information may be a measurement value such as a delay, a throughput, and/or a packet loss rate. The resource utilization is utilization of an air interface resource of a radio access network, for example, a ratio of a used air interface resource (for example, a quantity of physical resource blocks) in a specified RAN network slice subnet to an air interface resource allocated to the RAN network slice subnet.

Further, the measurement information related to the network slice further includes information about a cell and/or information about a base station. The information about the cell and/or the base station indicates that the related measurement information is related measurement information of a network slice supported by the cell and/or the base station.

It should be noted that the NPN RANs may send the measurement information related to the network slice periodically, or may send the measurement information based on information about a performance indicator corresponding to a corresponding slice. For example, when a performance indicator of the network slice exceeds a preset threshold, a corresponding RAN sends a performance indicator and resource utilization that are based on the slice.

Step 402: The NPN RAN domain NSSMF sends resource utilization and a performance indicator of a network slice subnet to the NPN NSMF.

After receiving the measurement information that is related to the network slice and that is sent by the one or more base stations, the NPN RAN domain NSSMF generates the resource utilization and/or the performance indicator of the network slice subnet based on the received measurement information related to the network slice, and sends the resource utilization and/or the performance indicator to the NSMF. For example, the NPN RAN domain NSSMF may generate resource utilization and/or a performance indicator for a corresponding network slice subnet based on received measurement information for a same network slice subnet. The resource utilization and/or the performance indicator of the network slice subnet may be statistical information or set information such as an average value, a maximum value, or a minimum value of resource utilization or performance indicator performance measurement information sent by each RAN. The resource utilization and/or the performance indicator of the network slice subnet may be statistical information or set information that is generated based on information about a base station included in the related information of the network slice and that is based on a cell (which may be one or more cells) covered by a same base station of the network slice subnet and that is about an average value, a maximum value, or a minimum value of resource utilization or performance indicators. The resource utilization or the performance indicator of the network slice subnet may be set information of resource utilization or performance indicators of each base station or each cell of the network slice subnet.

Further, the NPN RAN domain NSSMF may further determine resource utilization or performance indicators of network slice subnets of different cells and/or different base stations, for example, an average value, a maximum value, and/or a minimum value of delays of network slice subnets in a cell 1 of a gNB 1, an average value, a maximum value, and/or a minimum value of throughputs, and/or an average value, a maximum value, and/or a minimum value of packet loss rates. If the gNB 1 supports two network slice subnets, for example, S-NSSAI 1 and S-NSSAI 2, the NPN RAN domain NSSMF may generate statistical information for the two network slice subnets.

For another example, one network slice subnet corresponds to a plurality of cells, and the NPN RAN domain NSSMF may generate resource utilization or a performance indicator for the network slice subnet based on different cells. For example, an average value, a maximum value, and/or a minimum value of delays, an average value, a maximum value, and/or a minimum value of throughputs, and/or an average value, a maximum value, and/or a minimum value of packet loss rates of the S-NSSAI 1 in a cell A, or an average value, a maximum value, and/or a minimum value of delays, an average value, a maximum value, and/or a minimum value of throughputs, and/or an average value, a maximum value, and/or a minimum value of packet loss rates of the S-NSSAI 1 in a cell B may be collected for a plurality of cells or a plurality of base stations.

Step 403: The NPN NSMF determines, based on the received resource utilization and/or performance indicator of the network slice subnet, a handover policy of UE that accesses an NPN network slice subnet. The UE that accesses the NPN network slice subnet may be CAG UE, and is referred to as UE for short in this embodiment of this application.

The NPN NSMF determines a handover policy of the CAG UE based on the performance indicator and the resource utilization of the network slice or the network slice subnet, and/or a preset condition for a network handover. The preset condition for the network handover is a threshold that is configured in the NPN NSMF and that is for the performance and/or resource utilization of the network slice. When usage of the network slice subnet exceeds the foregoing threshold, the UE is triggered to perform a handover.

For example, the preset condition for the network handover is that an average end-to-end (end 2 end, E2E) delay of services carried in a network slice is greater than 20 ms, or a delay of a network slice subnet is greater than 5 ms, and resource utilization is greater than 80%. The NPN NSMF determines to request an additional carrier resource, and determines a handover policy. For example, the NPN NSMF determines that some UE accessing the NPN RAN needs to be handed over to another RAN. Content of the handover policy includes information about a source network slice subnet (for example, the S-NSSAI 1), a performance requirement of the source network slice subnet and/or a service level agreement SLA requirement of a source network slice, and a requirement for a resource provided by a target network slice subnet (for example, 20 radio air interface resources), resource usage duration (for example, 2 hours), and/or a coverage area (for example, a coverage area of the cell 1), a handover cause (for example, an average E2E delay of a service is greater than 20 ms, and radio resource utilization is greater than 80%), information about to-be-handed-over user equipment (for example, a quantity of UE (for example, CAG UE 1 to UE 10) that need to be handed over to a target RAN (namely, a PLMN RAN), an identifier of the to-be-handed-over UE, a location of the to-be-handed-over UE), quality of service QoS information of the to-be-handed-over UE, and/or the like.

The NSMF determines the handover policy based on information such as a delay performance indicator and/or a throughput performance indicator that are/is sent by the NPN RAN domain NSSMF, a configured network slice requirement, and/or the resource utilization of the network slice subnet. For example, if it is determined, through evaluation based on the foregoing information, 10 CAG UE is handed over to the PLMN RAN, the resource utilization of the network slice or the network slice subnet may reach below the preset threshold, and the delay, the throughput and/or the like meet the requirement of the network slice.

Step 404: The NPN NSMF sends a resource request to the PLMN NSMF based on the handover policy determined in step 403, to request the PLMN NSMF to provide a resource in the target network slice subnet, so that the UE that accesses the source network slice subnet uses the resource provided by the target network slice subnet after being handed over to the target network slice subnet.

The resource request includes the information about the source network slice subnet. In addition, the resource request further includes the service level agreement SLA requirement of the source network slice and/or the performance requirement of the source network slice subnet, the requirement for the resource provided by the target network slice subnet, the information about the to-be-handed-over user equipment, the quality of service information of the to-be-handed-over user equipment, and/or the handover cause.

The information about the source network slice subnet (which may be information about a network slice subnet of the NPN, for example, network slice subnet information in the NPN RAN domain) is used by the PLMN NSMF to determine information about the network slice subnet based on the information about the source network slice subnet. The information about the target network slice subnet includes the information about the target base station, the information about the target cell, and an identifier of the target network slice subnet. The information about the source network slice subnet includes one or more of the following information: a source network slice identifier, an identifier of the source network slice subnet, a type of the source network slice (for example, an eMBB slice), a source base station identifier list (for example, the gNB 1), a source cell identity list (for example, the cell 1), information about a mapping relationship between UE and a source cell list, and the like. For example, the PLMN NSMF determines a type of the target network slice based on the type of the source network slice. The PLMN NSMF determines the target base station, target cell and the like based on a neighbor relationship between the source cell identity and/or the source base station identifier, and a source cell.

The service level agreement SLA requirement of the source network slice and/or the performance requirement of the source network slice subnet. The SLA requirement of the source network slice may be carried in a service profile. The performance requirement of the source network slice subnet may be carried in a RAN SliceProfile. The SLA requirement of the source network slice and/or the performance requirement of the source network slice subnet include/includes a delay requirement and/or a throughput requirement. The requirement of the source network slice and/or the performance requirement of the source network slice subnet are/is used by the PLMN NSMF to determine a performance requirement of the target network slice subnet. For example, if the requirement of the source network slice is that the E2E delay is less than 20 ms, the PLMN NSMF may determine that a delay of the target network slice subnet is less than 5 ms. For example, if a delay of the source network slice subnet is less than 5 ms, the PLMN NSMF may determine that the delay of the target network slice subnet is less than 5 ms. A PLMN MSMF may determine the requirement of the target network slice subnet based on preconfigured data and the requirement of the source network slice. The PLMN MSMF may further determine the requirement of the source network slice subnet as the requirement of the target network slice subnet.

The requirement for the resource provided by the target network slice subnet includes a requirement for a quantity of resources provided by the target network slice subnet, a requirement for a time period of the resource provided by the target network slice subnet, a requirement for service traffic provided by the target network slice subnet, and/or a requirement for a carrier frequency provided by the target network slice subnet. For example, one or more of the following information: the quantity requirement (a DL and/or UL resource requirement, for example, 20 radio resource units), the requirement of the service traffic (for example, 70 Mbps/s), the requirement for the time period of the resource (for example, 10:00 to 12:00), and/or a carrier frequency (for example, 1.8 GHz frequency band) of the resource provided by the target network slice subnet are included. The requirement for the resource provided by the target network slice subnet is used to request a capability of a resource provided by the target cell. The capability of the resource provided by the target cell includes: a capability of a quantity of uplink and/or downlink resources (for example, a quantity of resource blocks) provided by the target cell, a capability of service traffic provided by the target cell, a capability of a time period of the resource provided by the target cell, and a capability of a carrier frequency provided by the target cell. For example, the resource requirement is 20 radio resource units, resource requirement time is from 10:00 to 12:00, the service traffic requirement (for example, 70 Mbps/s), the carrier frequency (for example, 1.8 GHz frequency band), and the like.

The information about the to-be-handed-over user equipment is used to determine a correspondence between the to-be-handed-over user equipment and the target base station and/or a correspondence between the to-be-handed-over user equipment and the target cell. The information about the to-be-handed-over user equipment includes: the identifier of the to-be-handed-over UE (for example, CAG UE 1 to UE 10), a quantity of the to-be-handed-over UE (for example, 10 UE), location information of the UE, or an area to which the UE belongs (for example, a cell or a raster to which the UE belongs). The UE information may be used by the PLMN RAN domain NSSMF to allocate one or more to-be-handed-over UE to the target base station.

Specifically, the NPN NSMF determines the to-be-handed-over UE based on obtained radio measurement and/or service volume information of UE that accesses the source network slice subnet. The NPN NSMF may obtain, from the NPN NSSMF, the radio measurement and/or the service volume information of the UE that accesses the source network slice subnet. For example, UE 1 has a large service volume and needs to consume a large quantity of resources, and it is determined that the UE 1 is the to-be-handed-over UE. For another example, radio measurement performed by UE 2 on a source cell (reference signal received power RSRP measured by the UE: Reference Signal Received Power) is poor, but a measurement result of a radio condition of the target cell is good. Therefore, it is determined that the UE 2 is the to-be-handed-over UE. For another example, the to-be-handed-over UE is determined based on the radio measurement and service measurement of the UE. A radio measurement value of UE 3 for the source cell is general, and is close to a radio measurement value for the target cell. However, a service volume of the UE 3 is large, and load of the target cell is light. Therefore, the UE 3 is determined as the to-be-handed-over UE.

Handover cause: a preset condition of the network slice subnet (which may also be referred to as a preset threshold of the network slice subnet, for example, an average E2E delay of a service carried by the slice subnet S-NSSAI 1 in the cell 1 is greater than 20 ms, the delay of the network slice subnet is greater than 5 ms, or radio resource utilization is greater than 80%). The handover cause is used by the PLMN NSMF to determine, based on the handover cause, whether to allocate resources of the target network slice subnet to the UE, and determine resources that can be provided by the target network slice subnet, to determine whether the UE that accesses the source network slice subnet is allowed to be handed over.

Quality of service QoS information of the to-be-handed-over user equipment is used to determine a quantity of resources provided by the target base station for the to-be-handed-over user equipment. The service QoS information includes one or more of the following information: a service QoS identifier and a service QoS attribute (for example, a QoS attribute of a video service, such as a delay, a delay jitter, a throughput, and a packet loss rate of the service).

Step 405: After receiving the resource request, the PLMN NSMF sends a resource requirement request to the PLMN RAN domain NSSMF based on the information carried in the resource request, to request the PLMN RAN domain NS SMF to determine the resource provided by the target network slice subnet. The information included in the handover policy in step 404 may be carried in the resource request.

After receiving the resource request, the PLMN NSMF determines the PLMN RAN domain NSSMF based on the information about the network slice subnet, and sends the resource requirement request to the determined PLMN RAN domain NSSMF. For example, the PLMN NSMF determines the target network slice subnet based on a preconfigured target network slice (for example, a network slice of the PLMN) that provides a shared resource for the source network slice, and the information about the source network slice subnet (for example, determines the target network slice subnet based on information about a service area or location of the source network slice subnet and information about the determined target network slice), and then sends the resource requirement request to a PLMN RAN domain NSSMF related to the determined target network slice subnet. Alternatively, the PLMN NSMF sends, based on a preconfigured target network slice subnet that provides a shared resource for the source network slice subnet, the resource requirement request to a PLMN RAN domain NSSMF related to the determined target network slice subnet.

The PLMN NSMF may further determine the information about the target network slice subnet based on the information about the source network slice subnet. The information about the target network slice subnet is carried in the resource requirement request. The information about the target network slice subnet includes the information about the target base station, the information about the target cell, and the identifier of the target network slice subnet. The information about the target network slice subnet is used to indicate a source network slice subnet management function device to trigger a source base station to hand over to-be-handed-over user equipment from a cell covered by the source base station to a cell that is covered by the target base station in the target network slice subnet.

Further, the resource request carries the SLA requirement of the source network slice (for example, an NPN network slice) and/or the performance requirement of the source network slice subnet. The NPN NSMF determines the performance requirement of the source network slice subnet based on the SLA requirement of the source network slice, and then determines the performance requirement of the target network slice subnet based on the performance requirement of the source network slice subnet. The PLMN NSMF determines the requirement of the target network slice subnet based on the SLA requirement of the source network slice, and carries the determined requirement of the target network slice subnet in the resource requirement request. For example, the performance requirement of the source network slice is that an E2E delay is less than 20 ms, and the PLMN NSMF determines that the performance requirement of the target network slice subnet (for example, the PLMN RAN domain network slice subnet) is that time is less than 5 ms.

If the resource request carries the performance requirement of the source network slice subnet, the PLMN NSMF determines the performance requirement of the target network slice subnet based on the performance requirement of the source network slice subnet, and carries the performance requirement of the target network slice subnet in the resource requirement request. For example, the performance requirement of the source network slice subnet is that a delay is less than 5 ms, and the PLMN NSMF determines that the performance requirement of the target network slice subnet (for example, the PLMN RAN domain network slice subnet) is that time is less than 5 ms.

Further, the resource request carries the handover cause. The PLMN NSMF determines, based on the handover cause, to provide the resource of the target network slice subnet for the to-be-handed-over user equipment, and then the target network slice subnet sends the resource requirement request.

Further, the resource request carries the information about the to-be-handed-over UE, and the PLMN NSMF carries the information about the to-be-handed-over UE in a resource requirement request message, so that the PLMN NSMF domain network slice subnet (a target network slice subnet management function device) determines the correspondence between the to-be-handed-over user equipment and the target base station and/or the correspondence between the to-be-handed-over user equipment and the target cell. For example, the PLMN RAN domain NSSMF determines a corresponding target base station based on location information of the to-be-handed-over UE, or determines the correspondence between the to-be-handed-over UE and the target base station and/or the target cell based on information about a correspondence between the UE and the source base station and information about a correspondence between the source base station and the target base station and/or the target cell. Alternatively, the PLMN NSMF determines the correspondence between the target base station and the to-be-handed-over UE based on a quantity of to-be-handed-over UE. For example, five pieces of to-be-handed-over UE are allocated to a target base station 1, and the other five pieces of to-be-handed-over UE are allocated to a target base station 2.

If the resource request carries the service QoS information of the UE, the PLNM NSMF carries the service QoS information of the UE in the resource requirement request, to determine a quantity of resources provided by the target base station for the to-be-handed-over user equipment. That is, the PLNM NSSMF determines a quantity of resources for each UE based on the service QoS information of the UE.

Further, the resource request carries the requirement for the resource provided by the target network slice subnet. The PLMN MSMF carries the requirement for the resource provided by the target network slice subnet in the resource requirement request.

**Table 1 shows that the PLMN NSMF performs processing based on the information carried in the resource request, and carries related information in the resource requirement request.**

| Step 404: Parameter of the information carried in the resource request | Processing on the parameter by a PLMN NSMS | Step 405: Parameter of the resource requirement request |
|---|---|---|
| Information about the source network slice subnet | Determine the information about the target network slice subnet based on the information about the source network slice subnet, including the information about the target base station, the information about the target cell, and/or the identifier of the target network slice subnet. | Determined information about the target network slice subnet |
| SLA requirement of the source network slice and/or the performance requirement of the source network slice subnet | Determine the performance requirement of the source network slice subnet based on the SLA requirement of the source network slice, and then determine the performance requirement of the target network slice subnet based on the performance requirement of the source network slice subnet. | Performance requirement of the target network slice subnet |
| Handover cause: | The PLMN NSMF determines, based on the handover cause, whether to provide the resource of the target network slice subnet to the source network slice subnet. | NULL |
| For example, an average E2E delay of a service carried by the slice subnet S-NSSAI 1 in the cell 1 is greater than 20 ms, or the delay of the network slice subnet is greater than 5 ms, and radio resource utilization is greater than 80%. | | |
| Information about the to-be-handed-over UE: | NULL | Information about the to-be-handed-over UE: |
| including one or more of the following information: an identifier of the to-be-handed-over UE (for example, CAG UE 1 to UE 10), a quantity of the to-be-handed-over UE (for example, 10 UE), UE location information, or a coverage area (a cell list or a raster list, for example, a cell edge user of the cell 1) | | including one or more of the following information: an identifier of the to-be-handed-over UE (for example, CAG UE 1 to UE 10), a quantity of the to-be-handed-over UE (for example, 10 UE), UE location information, or a coverage area (a cell list or a raster list, for example, a cell edge user of the cell 1) |
| Service QoS information of UE: including one or more of the following information: a service QoS identifier 5QI and a QoS attribute (for example, a QoS attribute of a video service, such as a delay, a delay jitter, a throughput, and a packet loss rate of the service) | NULL | Service QoS information of UE: including one or more of the following information: a service QoS identifier 5QI and a QoS attribute (for example, a QoS attribute of a video service, such as a delay, a delay jitter, a throughput, and a packet loss rate of the service) |
| Information about a requirement for a resource provided by the target network slice subnet: | NULL | Information about a requirement for a resource provided by the target network slice subnet: |
| including one or more of the following information: a DL and/or UL resource requirement (for example, 20 radio resource units), a service traffic requirement (for example, 70 Mbps/s), a resource requirement time period (for example, from 10:00 to 12:00), and/or a carrier frequency (for example, 1.8 GHz frequency band) | | including one or more of the following information: a DL and/or UL resource requirement (for example, 20 radio resource units), a service traffic requirement (for example, 70 Mbps/s), a resource requirement time period (for example, from 10:00 to 12:00), and/or a carrier frequency (for example, 1.8 GHz frequency band) |

Step 406: After receiving the resource requirement request sent by the PLMN NSMF, the PLMN RAN domain NSSMF processes the information carried in the resource requirement request, and then sends a response to the resource requirement request to the PLMN NSMF.

After receiving the resource requirement request, the PLMN RAN domain NSSMF determines, based on the information carried in the resource requirement request and preset information about the target network slice, the information about the resource provided by the target network slice subnet, and sends, to the PLMN RAN domain NSSMF, the response to the resource requirement request. The response to the resource requirement request includes: The information about the target network slice subnet includes the information about the target base station, the information about the target cell, and the identifier of the target network slice subnet, and the information about the target network slice subnet is determined based on the information about the source network slice subnet.

The preset information about the target network slice may be information about the target network slice subnet preconfigured by the NPN NSMF and the PLMN NSMF, for example, a type of a corresponding target slice subnet determined based on a type of the source network slice subnet, and a target network slice subnet corresponding to the source network slice subnet determined based on a neighbor relationship between a base station and/or cell and a network slice identifier. In this embodiment of this application, the target network slice is a preconfigured network slice in a PLMN domain that can provide a resource for a network slice in an NPN domain.

The resource requirement request further carries the performance requirement of the target network slice subnet. After receiving the resource requirement request, the PLMN RAN domain NSSMF determines, based on the performance requirement of the target network slice subnet, a quantity of resources provided by the target cell and/or a performance assurance capability provided by the target cell, to support a performance requirement of the PLMN RAN network slice subnet. The quantity of resources provided by the target cell includes a quantity of resources provided by each target base station (for example, the base station 1 provides eight resource units, and the base station 2 provides five resource units). The performance assurance capability provided by the target cell includes a throughput capability, a packet loss rate capability, and/or a delay capability. The PLMN RAN domain NSSMF may determine, based on information about the source base station and/or information about the UE that accesses the source base station, a capability of a quantity of resources that can be provided by each target base station. For example, a source base station 1 has a large quantity of access users, and a large quantity of UE needs to be handed over to a target base station 1. Therefore, the target base station needs to provide a large quantity of resources. For example, the target base station 1 needs to provide eight resource units (for example, resource blocks, resource blocks, RBs).

That the PLMN RAN domain NSSMF determines a performance assurance capability (for example, a throughput requirement, a packet loss rate requirement, and/or a delay requirement) provided by the target cell may be: The PLMN RAN domain NSSMF determines, based on a throughput requirement for supporting the PLMN RAN network slice subnet, a throughput capability that can be provided by each target RAN. The PLMN RAN domain NSSMF determines a capability of a packet loss rate of each target RAN based on a packet loss rate requirement for supporting the PLMN RAN network slice subnet.

Further, the resource requirement request further carries the information about the to-be-handed-over UE (for example, the identifier of the to-be-handed-over UE, a quantity of to-be-handed-over UE, and/or location information of the to-be-handed-over UE). The PLMN RAN domain NSSMF determines the correspondence between the to-be-handed-over user equipment and the target base station and/or the correspondence between the to-be-handed-over user equipment and the target cell based on the information about the to-be-handed-over user equipment. The PLMN RAN domain NSSMF carries the correspondence between the to-be-handed-over user equipment and the target base station and/or the correspondence between the to-be-handed-over user equipment and the target cell in the response to the resource requirement request. For example, the PLMN RAN NSSMF may determine the target RAN or the target cell (namely, the target cell) based on a location of the to-be-handed-over UE, or may determine the target RAN or the target cell based on the quantity of to-be-handed-over UE. For example, the PLMN RAN domain NSSMF allocates to-be-handed-over UE 1 to UE 3 to a target RAN 1 or a target cell 1, and corresponds to-be-handed-over UE 4 to UE 8 to a target RAN 2 or a target cell 2.

If the service QoS information of the to-be-handed-over UE is in the resource requirement request message, the PLMN RAN domain NSSMF determines a resource for the to-be-handed-over UE based on the QoS information of the service of the to-be-handed-over UE. For example, resources (for example, an air interface quantity) allocated by the target base station to the to-be-handed-over UE is determined. For example, the PLMN RAN domain NSSMF determines, based on the service QoS information of the UE, that a resource provided by the base station 1 for the UE 1 is two radio resource units, and a resource provided by the base station 1 for the UE 2 is one radio resource unit.

If the resource requirement request message includes requirement information for the resource provided by the target network slice subnet, the PLMN RAN domain NSSMF determines, based on the requirement for the resource provided by the target network slice subnet, the capability of the resource provided by the target cell and/or the target base station, and carries the capability of the resource provided by the target cell and/or the target base station in the resource requirement request. The capability of the resource provided by the target cell and/or the target base station is used by the target base station to determine a resource provided by the target cell in the target network slice subnet.

The requirement information for the resource provided by the target network slice subnet includes: The capability of the resource provided by the target cell and/or the target base station includes: a capability of a quantity of uplink and/or downlink resources provided by the target cell and/or the target base station, a capability of service traffic provided by the target cell and/or the target base station, a capability of a time period of the resource provided by the target cell and/or the target base station, a capability of a carrier frequency provided by the target cell and/or the target base station, a requirement for a quantity of resources provided by the target network slice subnet, a requirement of a time period of the resource provided by the target network slice subnet, a requirement of service traffic provided by the target network slice subnet, and/or a requirement of a carrier frequency provided by the target network slice subnet.

Table 2 shows that the PLMN RAN domain NSSMF performs processing based on the information carried in the resource requirement request, and carries related information in the response to the resource requirement request.

**Table 2**

| Step 405: Parameter of the resource requirement request | Processing on the parameter by a PLMN RAN NSSMS PRODUCER | Step 406: Parameters in the response to the resource requirement request |
|---|---|---|
| The information about the target network slice subnet includes the information about the target base station, the information about the target cell, and/or the identifier of the target network slice subnet. | NULL | The information about the target network slice subnet includes the information about the target base station, the information about the target cell, and/or the identifier of the target network slice subnet. |
| Performance requirement of the target network slice subnet | The PLMN RAN domain NSSMF determines, based on the performance requirement of the target network slice subnet, a quantity of resources provided by the target cell and/or a performance assurance capability provided by the target cell. | The quantity of resources provided by the target cell and/or the performance assurance capability provided by the target cell. |
| Information about the to-be-handed-over UE: | The PLMN RAN NSSMF determines a correspondence between the to-be-handed-over user equipment and the target base station and/or a correspondence | The correspondence between the to-be-handed-over user equipment and the target base station and/or the correspondence between the to-be-handed-over user equipment and |
| an identifier of the to-be-handed-over UE (for example, CAG UE 1 to UE 10), a quantity of to-be- | | |
| handed-over UE (for example, 10 UE), UE location information, or a coverage area (a cell list or a raster list, for example, a cell edge user of the cell 1) | between the to-be-handed-over user equipment and the target cell based on the information about the to-be-handed-over UE and the target base station and/or the target cell. | the target cell is: For example, to-be-handed-over UE 1 to UE 3 correspond to a target base station 1, indicating that the to-be-handed-over UE 1 to UE 3 are handed over to the target base station 1. |
| Service QoS information of the to-be-handed-over UE: including one or more of the following information: a service QoS identifier 5QI and a QoS attribute (for example, a QoS attribute of a video service, such as a delay, a delay jitter, a throughput, and a packet loss rate of the service) | The PLMN RAN domain NSSMF determines, based on the service QoS information of the UE, a resource of the to-be-handed-over UE (that is, a resource provided by the target base station for the to-be-handed-over UE), for example, determines, based on the service QoS information of the UE, that a resource provided by the base station 1 for the UE 1 is two radio resource units, and a resource provided by the base station 1 for the UE 2 is one radio resource unit. | A correspondence between the target base station and/or the target cell, the UE, and the resource provided by the target base station and/or the target cell is used to indicate the resource provided by the target base station for the UE. |
| Information about a requirement for a resource provided by the target network slice subnet: | The PLMN RAN NSSMF determines, based on the requirement for the resource provided by the target network slice subnet, the capability of the resource provided by the target cell. | The capability of the resource provided by the target cell (namely, the target cell) and/or the target base station includes a capability of a quantity of uplink and/or downlink resources provided by the target cell and/or the target base station, a capability of service traffic provided by the target cell and/or the target base station, a capability of a time period of the resource provided by the target cell and/or the target base station, and a capability of a carrier frequency provided by the target cell and/or the target base station. |
| including one or more of the following information: a DL and/or UL resource requirement (for example, 20 radio resource units), a service traffic requirement (for example, 70 Mbps/s), a resource requirement time period (for example, from 10:00 to 12:00), and/or a carrier frequency (for example, 1.8 GHz frequency band) | | |

Step 407: After receiving the response to the resource requirement request sent by the PLMN RAN domain NSSMF, the PLMN NSMF sends, to the NPN NSMF, content carried in the response to the resource requirement request.

The PLMN NSMF may directly send the response to the resource requirement request to the NPN NSMF, or may send, to the NPN NSMF by using another message (for example, a response to the resource request), the content carried in the response to the resource requirement request.

Step 408: After receiving the content that is carried in the response to the resource requirement request and that is carried by the PLMN RAN domain NSSMF, the NPN NSMF sends first handover configuration information to an NPN RAN NSSMF based on the received content, to trigger the to-be-handed-over UE to perform handover.

The first handover configuration information includes information included in the response to the resource request. For example, the first handover configuration information includes the information about the target network slice subnet, information about a resource that can be allocated to the target network slice subnet, the correspondence between the target base station, the to-be-handed-over UE and a resource that provides for the UE, and/or a correspondence between the to-be-handed-over UE and an accessed source base station or source cell, and the correspondence between the UE and the target base station or the target cell.

Step 409: After receiving the first handover configuration information, the NPN RAN domain NSSMF sends second handover configuration information to each source base station.

The second handover configuration information sent to each source base station may include same content with the first handover configuration information, for example, including the information about the target network slice subnet, the information about the resource that can be allocated to the target network slice subnet, a correspondence between each target base station, UE and a resource that provides for the UE, and/or a correspondence between to-be-handed-over UE that has accessed the source base station and the target base station.

In an optional manner, the second handover configuration information sent to each source base station may alternatively be different from the first handover configuration information. After receiving the first handover configuration information, the NPN RAN domain NSSMF determines to-be-handed-over user equipment that accesses each source base station. The second handover configuration information includes: the information about the resource that can be allocated to the target network slice subnet, a correspondence between to-be-handed-over user equipment that accesses a source base station that receives the second handover configuration message and the target base station, and/or a correspondence between to-be-handed-over user equipment that accesses a source base station that receives the second handover configuration message, the target base station, and a resource provided for corresponding UE.

For example, the first handover configuration information includes a correspondence between the target base station 1 or the target cell 1 and the UE 1 to UE 3, and a correspondence between the target base station 2 or the target cell 2 and the UE 4 to UE 6. The target cell 1 is a cell covered by the target base station 1, and the target cell 2 is a cell covered by the target base station 2. Second handover configuration information sent to the target base station 1 includes the correspondence between the target base station 1 or the target cell 1 and the UE 1 to UE 3, but does not include the correspondence between the target base station 2 or the target cell 2 and the UE 4 to UE 6. Second handover configuration information sent to the target base station 2 includes the correspondence between the target base station 2 or the target cell 2 and the UE 4 to UE 6, but does not include the correspondence between the target base station 1 or the target cell 1 and the UE 1 to UE 3.

Step 410: After receiving the second handover configuration information, the source base station sends a network handover request to a target network base station based on the second handover configuration information. The network handover request carries the information about the target network slice subnet, the information about the to-be-handed-over UE, and/or the capability of the resource provided by the target base station or the target cell for the UE. Optionally, the network handover request may carry the QoS information of the service of the to-be-handed-over UE instead of a resource requirement provided by the target base station for the UE, so that the target base station determines, based on the service QoS information of the to-be-handed-over UE, source requirements allocated to the to-be-handed-over UE.

Step 410': After receiving the network handover request sent by the source base station, the target base station performs processing based on the network handover request.

Processing performed by the target base station based on the network handover request is a conventional technology. Details are not described herein in this embodiment of this application.

Step 411: The target base station sends a network handover response to the source base station.

Step 412: The source base station sends a handover instruction to the to-be-handed-over UE.

It should be noted that there is no time sequence between step 410 and step 412.

According to the foregoing embodiment, the NPN NSMF triggers, based on a performance and resource utilization that are of the source network slice subnet and that are reported by the source base station, UE that accesses the source network slice to perform a network handover. In addition, the PLMN RAN domain NSSMF determines the information about the target network slice subnet and the target base station based on the SLA requirement of the source network slice and/or the network slice subnet and/or the information about the to-be-handed-over UE. According to this method, the network handover may be performed based on a resource requirement of the source network slice subnet, so that the handover can not only meet the requirement of the source network slice, but also allocate resources in the target network slice and the network slice subnet more properly after the handover, and ensure that the SLA requirement is met.

FIG. 5 is a network handover method according to an embodiment of this application. The method procedure is implemented based on any one of the schematic structural diagrams shown in FIG. 2A to FIG. 2D. An NPN NSMF corresponds to the NPN network slice management function device 102 in FIG. 2B or FIG. 2C, an NPN RAN domain NSSMF device corresponds to the RAN domain network slice subnet management function device 103 in any one of FIG. 2B to FIG. 2D, and NPN RANs correspond to one or more base stations 1 in FIG. 2B to FIG. 2D. A PLMN NSMF corresponds to the network slice management function device 102-1 in the PLMN in FIG. 2B to FIG. 2D, a PLMN RAN domain NSSMF corresponds to the RAN domain network slice subdomain management function device 103-1 in FIG. 2B, and PLMN RANs correspond to any one or more base stations 2 in FIG. 2B to FIG. 2D. Other devices in FIG. 2 are not shown in FIG. 5. Different from the method shown in FIG. 4, in the method shown in FIG. 5, the NPN NSMF sends a resource request to the PLMN NSMF based on information such as a network deployment requirement, resource planning, and/or a service peak resource requirement. The method shown in FIG. 5 includes the following steps.

Step 501: The NPN NSMF sends a resource request message to the PLMN NSMF, to request the PLMN NSMF to allocate a resource of a target network slice subnet to a source network slice subnet.

The NPN NSMF sends a resource request to the PLMN NSMF based on the information such as the network deployment requirement, the resource planning, and/or the peak service resource requirement. For example, the NPN NSMF determines, from the PLMN NSMF based on the network deployment requirement, the resource planning, and/or the service peak resource requirement, that 7:00 to 9:00 every morning is a time period in which the source network slice subnet has a high requirement for a network resource, and needs to apply to the target network slice subnet for a shared resource, so that UE that accesses the source network slice subnet can be handed over to the target network slice subnet.

The resource request includes information about the source network slice subnet, service-level agreement (service-level agreement, SLA) information of the source network slice, and/or SLA requirement information of the source network slice subnet, and/or requirement information of a resource provided by the target network slice subnet.

For specific descriptions of the information about the source network slice subnet, the SLA information of the source network slice, the SLA information of the source network slice subnet, and/or the requirement information of the resource provided by the target network slice subnet, refer to the description in step 401. Details are not described in this embodiment of this application again.

Step 502: After receiving the resource request, the PLMN NSMF sends a resource requirement request to the PLMN RAN domain NSSMF based on information carried in the resource request, to request the PLMN RAN domain NSSMF to determine the resource provided by the target network slice subnet.

After receiving the resource request, the PLMN NSMF determines the PLMN RAN domain NSSMF based on the information about the source network slice subnet, and sends the resource requirement request to the determined PLMN RAN domain NSSMF. For example, the PLMN NSMF determines a target network slice based on a preconfigured target network slice (for example, a network slice of the PLMN) that provides a resource for the source network slice, and determines the target network slice subnet based on the information about the source network slice subnet (for example, determines the target network slice subnet based on information about a service area or location of the source network slice subnet and information about the determined target network slice). Then, the PLMN NSMF sends a resource requirement request to a determined PLMN RAN domain NSSMF related to the target network slice subnet. Alternatively, the PLMN NSMF determines the target network slice subnet based on a preconfigured target network slice subnet that provides a shared resource for the source network slice subnet, and sends the resource requirement request to a PLMN RAN domain NSSMF related to the determined target network slice subnet.

The PLMN NSMF may further determine information about the target network slice subnet based on the information about the source network slice subnet, and carry the information about the target network slice subnet in the resource requirement request. The information about the target network slice subnet includes information about a target base station, information about a target cell, and an identifier of the target network slice subnet. The information about the target network slice subnet is used to indicate a source network slice subnet management function device to trigger a source base station to hand over to-be-handed-over user equipment from a cell covered by the source base station to a cell that is covered by the target base station in the target network slice subnet.

Further, the resource request carries an SLA requirement of a source network slice (for example, an NPN network slice) and/or a performance requirement of the source network slice subnet. The NPN NSMF determines the performance requirement of the source network slice subnet based on the SLA requirement of the source network slice, and then determines a performance requirement of the target network slice subnet based on the performance requirement of the source network slice subnet. The PLMN NSMF determines the requirement of the target network slice subnet based on the SLA requirement of the source network slice, and carries the determined requirement of the target network slice subnet in the resource requirement request. For example, the performance requirement of the source network slice is that an E2E delay is less than 20 ms, and the PLMN NSMF determines that the performance requirement of the target network slice subnet (for example, the PLMN RAN domain network slice subnet) is that time is less than 5 ms.

If the resource request carries the performance requirement of the source network slice subnet, the PLMN NSMF determines the performance requirement of the target network slice subnet based on the performance requirement of the source network slice subnet, and carries the performance requirement of the target network slice subnet in the resource requirement request. For example, the performance requirement of the source network slice subnet is that a delay is less than 5 ms, and the PLMN NSMF determines that the performance requirement of the target network slice subnet (for example, the PLMN RAN domain network slice subnet) is that time is less than 5 ms.

Further, the resource request carries a requirement for a resource provided by the target network slice subnet. The PLMN MSMF carries the requirement for the resource provided by the target network slice subnet in the resource requirement request.

Table 3 shows that the PLMN NSMF performs processing based on information carried in the resource request, and carries related information in the resource requirement request.

**Table 3**

| Step 502: Parameter of the information carried in the resource request | Processing on the parameter by a PLMN NSMS | Step 503: Parameter of the resource requirement request |
|---|---|---|
| Information about the source network slice subnet | Determine information about the target slice subnet, including the information about the target base station, the information about the target cell, and/or the identifier of the target network slice subnet. | Determined information about the target network slice subnet |
| SLA requirement of the source network slice and/or the performance requirement of the source network slice subnet | Determine the performance requirement of the source network slice subnet based on the SLA requirement of the source network slice, and then determine the performance requirement of the target network slice subnet based on the performance requirement of the source network slice subnet. | Performance requirement of the target network slice subnet |
| Information about a requirement for a resource provided by the target network slice subnet: | NULL | Information about a requirement for a resource provided by the target network slice subnet: |
| including one or more of the following information: a DL and/or UL resource requirement (for example, 20 radio resource units), a service traffic requirement (for example, 70 Mbps/s), a resource requirement time period (for example, from 10:00 to 12:00), and/or a carrier frequency (for example, 1.8 GHz frequency band) | | including one or more of the following information: a DL and/or UL resource requirement (for example, 20 radio resource units), a service traffic requirement (for example, 70 Mbps/s), a resource requirement time period (for example, from 10:00 to 12:00), and/or a carrier frequency (for example, 1.8 GHz frequency band) |

Step 503: After receiving the resource requirement request sent by the PLMN NSMF, the PLMN RAN domain NSSMF performs processing based on the information carried in the resource requirement request, and then sends a response to the resource requirement request to the PLMN NSMF.

After receiving the resource requirement request, the PLMN RAN domain NSSMF determines, based on the information carried in the resource requirement request, a resource allocated to the source network slice subnet, and sends the response to the resource requirement request to the PLMN RAN domain NSSMF. The response to the resource requirement request includes the information about the target network slice subnet, information about a resource provided by the target network slice subnet for the source network slice subnet, and/or the information about the target base station or the target cell. Preset information about a switchable network slice may be information about the target network slice subnet preconfigured by the NPN NSMF and the PLMN NSMF.

In this embodiment of this application, the target network slice is a preconfigured network slice in a PLMN domain that can provide a resource for a network slice in an NPN domain. The preset information about the target network slice may be the information about the target network slice subnet preconfigured by the NPN NSMF and the PLMN NSMF, for example, a type of a corresponding target slice subnet determined based on a type of the source network slice subnet, and a target network slice subnet corresponding to the source network slice subnet determined based on a neighbor relationship between a base station and/or cell and a network slice identifier. In this embodiment of this application, the target network slice is a preconfigured network slice in a PLMN domain that can provide a resource for a network slice in an NPN domain.

The resource requirement request further carries the performance requirement of the target network slice subnet. After receiving the resource requirement request, the PLMN RAN domain NSSMF determines, based on a performance requirement of the PLMN RAN network slice subnet carried in the resource requirement request, a quantity of resources provided by the target cell and/or a performance assurance capability provided by the target cell, to support the performance requirement of the PLMN RAN network slice subnet. The quantity of resources provided by the target cell includes a quantity of resources provided by each target base station (for example, the base station 1 provides eight resource units, and the base station 2 provides five resource units). The performance assurance capability provided by the target cell includes a throughput capability, a packet loss rate capability, and/or a delay capability. The PLMN RAN domain NSSMF may determine, based on information about the source base station and/or information about the UE that accesses the source base station, a capability of a quantity of resources that can be provided by each target base station. For example, a source base station 1 has a large quantity of access users, and a large quantity of UE needs to be handed over to the target base station 1. Therefore, the target base station needs to provide a large quantity of resources. For example, the target base station 1 needs to provide eight resource units (for example, resource blocks, resource blocks, RBs).

That the PLMN RAN domain NSSMF determines a resource assurance SLA requirement (for example, a throughput requirement, a packet loss rate requirement, and/or a delay requirement) provided by the target base station may be: The PLMN RAN domain NSSMF determines, based on a throughput requirement for supporting the PLMN RAN network slice subnet, a throughput requirement that can be provided by each target RAN. The PLMN RAN domain NSSMF determines a requirement of a packet loss rate of each target RAN based on a requirement for supporting a packet loss rate of the PLMN RAN network slice subnet. Resources that can be provided by each target base station can be determined based on the information about the source base station and the information about the UE that accesses the source base station.

The requirement information for the resource provided by the target network slice subnet includes: The capability of the resource provided by the target cell and/or the target base station includes: a capability of a quantity of uplink and/or downlink resources provided by the target cell and/or the target base station, a capability of service traffic provided by the target cell and/or the target base station, a capability of a time period of the resource provided by the target cell and/or the target base station, a capability of a carrier frequency provided by the target cell and/or the target base station; a requirement for a quantity of resources provided by the target network slice subnet, a requirement of a time period of the resource provided by the target network slice subnet, a requirement of service traffic provided by the target network slice subnet, and/or a requirement of a carrier frequency provided by the target network slice subnet.

If the resource requirement request message carries the information about the target network slice subnet, the PLMN RAN domain NSSMF may carry the information about the target network slice subnet in the response to the resource requirement request. Alternatively, the PLMN RAN domain NSSMF determines the target network slice subnet, and carries the information about the target network slice subnet in the response to the resource requirement request.

Table 4 shows that the PLMN RAN domain NSSMF performs processing based on the information carried in the resource requirement request, and carries related information in the response to the resource requirement request.

**Table 4**

| Step 503: Parameter of the resource requirement request | Processing on the parameter by a PLMN RAN domain NSSMS | Step 504: Parameter in the response to the resource requirement request |
|---|---|---|
| Determine the information about the target network slice subnet, including an identifier of the target network slice subnet, the information about the target base station, and/or the information about the target cell. | NULL | Determine the information about the target network slice subnet, including an identifier of the target network slice subnet, the information about the target base station, and/or the information about the target cell. |
| Performance requirement of the target network slice subnet | The PLMN RAN domain NSSMF determines, based on the performance requirement of the target network slice subnet, a quantity of resources provided by the target cell and/or a performance assurance capability provided by the target cell. | The quantity of resources provided by the target cell and/or the performance assurance capability provided by the target cell |
| Information about a requirement for a resource provided by the target network slice subnet: including one or more of the following information: a DL and/or UL resource requirement (for example, 20 radio resource units), a service traffic requirement (for example, 70 Mbps/s), a resource requirement time period (for example, from 10:00 to 12:00), and/or a carrier frequency (for example, 1.8 GHz frequency band) | The PLMN RAN NSSMF determines, based on the resource requirement information, a requirement for a resource provided by each target base station. | Requirement for a resource provided by the target base station Information such as a quantity of DL and/or UL resources or service traffic, a time period of a resource, and/or a carrier frequency provided by the target base station |

Step 504: After receiving the response to the resource requirement request sent by the PLMN RAN domain NSSMF, the PLMN NSMF sends, to an NPN NSMF, content carried in the response to the resource requirement request.

The PLMN NSMF may directly send the response to the resource requirement request to the NPN NSMF, or may send, to the NPN NSMF by using another message (for example, a response to the resource request), the content carried in the response to the resource requirement request.

Step 505: After receiving the content that is carried in the response to the resource requirement request and that is carried by the PLMN RAN domain NSSMF, the NPN NSMF sends first handover configuration information to an NPN RAN NSSMF based on the received content, to trigger the to-be-handed-over UE to perform handover.

The first handover configuration information includes information included in the response to the resource request. For example, the first handover configuration information includes the information about the target network slice subnet, information about a resource that can be allocated to the target network slice subnet, a correspondence between the target base station, the to-be-handed-over UE and a resource that provides for the UE, and/or a correspondence between the to-be-handed-over UE and an accessed source base station or source cell, and a correspondence between the UE and the target base station or the target cell.

Step 506: After receiving the first handover configuration information, the NPN RAN domain NSSMF sends second handover configuration information to each source base station.

The second handover configuration information sent to each source base station may include same content with the first handover configuration information, for example, including the information about the target network slice subnet, information about a resource that can be allocated to the target network slice subnet, a correspondence between each target base station, UE and a resource that provides for the UE, and/or a correspondence between to-be-handed-over UE that has accessed the source base station and the target base station.

In an optional manner, the second handover configuration information sent to each source base station may alternatively be different from the first handover configuration information. The second handover configuration information includes resource information that can be allocated to the target network slice subnet, a correspondence between a corresponding target base station, UE and a resource that provides for the UE, and/or a correspondence between to-be-handed-over UE that has accessed the source base station and the corresponding target base station.

For example, the first handover configuration information includes a correspondence between the target base station 1 or the target cell 1 and the UE 1 to UE 3, and a correspondence between the target base station 2 or the target cell 2 and the UE 4 to UE 6. The target cell 1 is a cell covered by the target base station 1, and the target cell 2 is a cell covered by the target base station 2. The second handover configuration information sent to the target base station 1 includes the correspondence between the target base station 1 or the target cell 1 and the UE 1 to UE 3, but does not include the correspondence between the target base station 2 or the target cell 2 and the UE 4 to UE 6. The second handover configuration information sent to the target base station 2 includes the correspondence between the target base station 2 or the target cell 2 and the UE 4 to UE 6, but does not include the correspondence between the target base station 1 or the target cell 1 and the UE 1 to UE 3.

Step 507: After receiving network handover configuration information, the source base station sends a handover request to the target network base station based on the network handover configuration information. The network handover request carries the information about the target network slice subnet, the information about the to-be-handed-over UE, and/or the requirement of the resource provided by the target base station for the UE. Optionally, the handover request may alternatively carry QoS information of a service of the to-be-handed-over UE instead of the requirement for the resource provided by the target base station for the UE, so that the target base station determines, based on the QoS information of the service of the to-be-handed-over UE, a source requirement allocated to the to-be-handed-over UE.

After receiving the network handover configuration information, the source base station sends the handover request to the target network base station based on the network handover configuration information after determining that use of the source network slice subnet meets a preset condition. The preset condition for using the source network slice subnet may be: a preset threshold for using the network slice subnet (for example, an average E2E delay of a service carried by a slice subnet S-NSSAI 1 in a cell 1 is greater than 20 ms, a delay of a network slice subnet is greater than 5 ms, or radio resource utilization is greater than 80%).

Further, after it is determined that the use of the source network slice subnet meets the preset condition, the requirement for the resource provided by the to-be-handed-over UE and/or the target base station for the UE is further determined. Therefore, the network handover request carries the information about the target network slice subnet, the information about the to-be-handed-over UE, and/or the requirement of the resource provided by the target base station for the UE. Optionally, the network handover request may alternatively carry QoS information of a service of the to-be-handed-over UE instead of a requirement for a resource provided by the target base station for the UE, so that the target base station determines, based on the QoS information of the service of the to-be-handed-over UE, a source requirement allocated to the to-be-handed-over UE.

Step 508: After receiving the network handover request sent by the source base station, the target base station performs processing based on the network handover request, and sends a network handover response to the source base station.

Processing performed by the target base station based on the network handover request is a conventional technology. Details are not described herein in this embodiment of this application.

Step 509: The source base station sends a network handover instruction to the determined to-be-handed-over UE.

It should be noted that there is no time sequence between step 507 and step 509.

According to the foregoing embodiment, the NPN NSMF sends a resource request to the PLMN NSMF based on information such as a network deployment requirement, resource planning, and/or a service peak resource requirement. In addition, the PLMN RAN domain NSSMF determines the information about the target network slice subnet and the target base station based on an SLA requirement of a source network slice and/or the network slice subnet and/or the information about the to-be-handed-over UE. After determining that the handover condition is met, the source base station triggers network handover. According to this method, the network handover may be performed based on a resource requirement of a source network slice subnet, so that the network handover can not only meet the requirement of the source network slice, but also allocate resources more properly in a handover process.

In the embodiments shown in FIG. 4 and FIG. 5, the source network slice is an NPN network slice, and the target network slice is a PLMN network slice. It should be noted that, in this embodiment of this application, the source network slice may alternatively be a PLMN network slice, that is, a terminal may be handed over between network slice subnets of the PLMN network slice. The source network slice subnet and the target network slice subnet may be network slice subnets in CN domains of different network slices. This is not limited in this embodiment of this application. In this application, the resource provided by the target network slice subnet may be an air interface resource, a computing resource (for example, a CPU), a bandwidth resource, and/or a storage resource that are provided by the target network slice subnet in the RAN domain. The resource provided by the target network slice subnet may be a computing resource (for example, a CPU), a bandwidth resource, and/or a storage resource that are provided by the target network slice subnet in the CN domain.

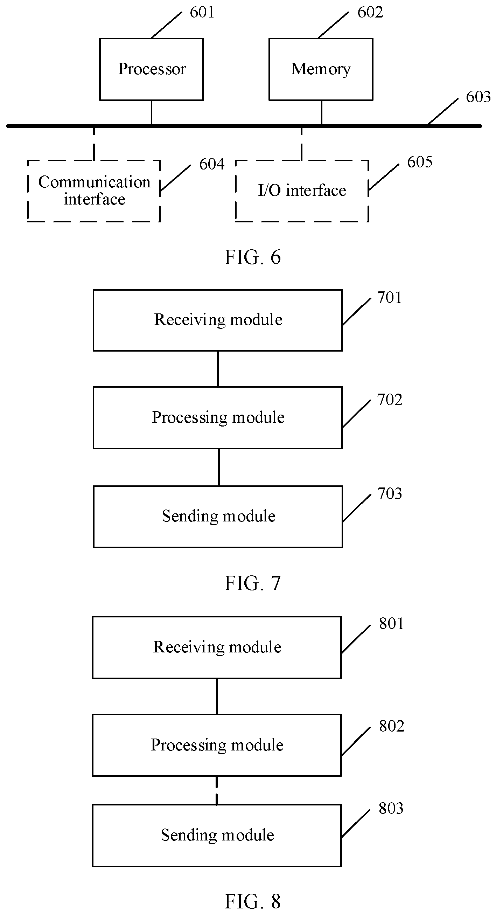

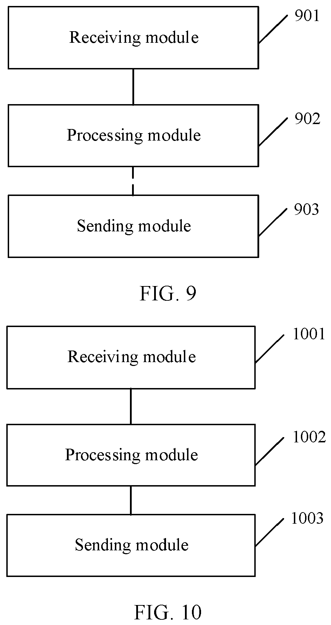

FIG. 6 is a schematic diagram of structures of a network slice and network slice subnet management device according to an embodiment of this application. A CSMF device 101, an NSMF device 102, an NSSMF device 103, and a base station in this application may all use a structure of a computer device shown in FIG. 9.

The computer device includes at least one processor 601 and a memory 602, and may further include a communication bus 603, a communication interface 604, and an I/O interface 605. The processor may be a general-purpose central processing unit (CPU), a microprocessor, an application-specific integrated circuit (application-specific integrated circuit, ASIC), or one or more integrated circuits for controlling solution program execution in this application.

The communications bus may include a path for transmitting information between the foregoing components. The communication interface uses a device such as any transceiver, and is configured to communicate with another device or a communication network, for example, communicate with the device by using the Ethernet, a radio access network (RAN), or a wireless local area network (Wireless Local Area Network, WLAN).

The memory may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and can be accessed by a computer. The memory may exist independently, and is connected to the processor through the bus. The memory may alternatively be integrated with the processor.

The memory is configured to store program code for executing the solutions of this application, and the processor controls execution. The processor is configured to execute the program code stored in the memory.

During specific implementation, the processor may include one or more CPUs, and each CPU may be a single-core (single-core) processor or a multi-core (multi-Core) processor. The processor herein may be one or more devices, circuits, and/or processing cores configured to process data (for example, computer program instructions).

During specific implementation, in an embodiment, the computer device may further include an input/output (I/O) interface. For example, an output device may be a liquid crystal display (liquid crystal display, LCD), a light emitting diode (light emitting diode, LED) display device, a cathode ray tube (cathode ray tube, CRT) display device, or a projector (projector). An input device may be a mouse, a keyboard, a touchscreen device, a sensing device, or the like.

The computer device may be a general-purpose computer device or a special-purpose computer device. During specific implementation, the computer device may be a desktop computer, a portable computer, a network server, a personal digital assistant (Personal Digital Assistant, PDA), a mobile phone, a tablet computer, a wireless terminal device, a communications device, an embedded device, or a device with a structure similar to that in FIG. 9. A type of the computer device is not limited in this embodiment of this application.

For the NSMF device 102 (for example, a source network slice management function device) or an NSMF device 102-1 (for example, a target network slice management function device), when the processor in the NSMF device 102 or the NSMF device 102-1 executes the program code stored in the memory, the NSMF device 102 may perform method steps corresponding to the NSMF device 102 or the NSMF device 102-1 in all the foregoing embodiments. For a specific execution process, refer to the foregoing embodiments. Details are not described herein again.

For the NSSMF device 103 (for example, a source network slice subnet management function device) or an NSSMF device 103-1 (for example, a target network slice subnet management function device), when the processor in the NSSMF device 103 or the NSSMF device 103-1 executes the program code stored in the memory, the NSSMF device 103 may perform method steps corresponding to the NSSMF device 103 in all the foregoing embodiments, and the NSSMF device 103-1 may perform method steps corresponding to the NSSMF device 103-1 in all the foregoing embodiments. For a specific execution process, refer to the foregoing embodiments. Details are not described herein again.

For the base station, when the processor in the base station executes the program code stored in the memory, the base station may perform method steps corresponding to the base station in all the foregoing embodiments. For a specific execution process, refer to the foregoing embodiments. Details are not described herein again.

FIG. 7 is a schematic diagram of a structure of a network slice management function device (specifically, an NSMF device) according to an embodiment of this application.

In an embodiment, a sending module 703 is configured to send a resource request to a target network slice management function device, where the resource request carries information about a source network slice subnet, and the resource request is used to request to provide a resource in a target network slice subnet.

A receiving module 701 is configured to receive a response to the resource request sent by the target network slice management function device, where the response to the resource request includes information about the target network slice subnet, the information about the target network slice subnet includes information about a target base station, information about a target cell, and an identifier of the target network slice subnet, and the information about the target network slice subnet is determined based on the information about the source network slice subnet.

The sending module 703 is further configured to send a handover configuration message to a source network slice subnet management function device, where the handover configuration message includes the information about the target network slice subnet, and the information about the target network slice subnet is used to indicate the source network slice subnet management function device to trigger a source base station to hand over to-be-handed-over user equipment from a cell covered by the source base station to a cell that is covered by the target base station in the target network slice subnet indicated by the identifier of the target network slice subnet.

Optionally, the receiving module 701 is further configured to receive resource utilization and/or a performance indicator of the source network slice subnet. A processing module 703 is configured to determine, based on the resource utilization and/or the performance indicator of the source network slice subnet and a preset condition of the resource utilization and/or a preset condition of the performance indicator, a handover policy for handing over the to-be-handed-over user equipment from the source network slice subnet to the target network slice subnet, where the handover policy includes content carried in the resource request.

Specifically, the receiving module of the NSMF may perform step descriptions of receiving and performing by the NPN NSMF in FIG. 4 or FIG. 5, for example, step 402, step 407, or step 504. The processing module 702 may perform a determining-related step of the NPN NSMF in FIG. 4 or FIG. 5, for example, step 403. The sending module 703 may perform sending-related steps of the NPN NSMF in FIG. 4 or FIG. 5, for example, step 404, step 408, step 501, or step 505.

FIG. 8 is a schematic diagram of a structure of a source network slice subnet management function device (specifically, an NSMF device 103) according to an embodiment of this application.

In an embodiment, a receiving module 801 is configured to receive a resource request, where the resource request carries information about a source network slice subnet, and the resource request is used to request to provide a resource in a target network slice subnet. A processing module 802 is configured to determine information about the target network slice subnet based on the information about the source network slice subnet, where the information about the target network slice subnet includes information about a target base station, information about a target cell, and an identifier of the target network slice subnet. A sending module 803 is configured to send a response to the resource request, where the response to the resource request includes the information about the target network slice subnet, and the information about the target network slice subnet is used to indicate the source network slice subnet management function device to trigger a source base station to hand over to-be-handed-over user equipment from a cell covered by the source base station to a cell that is covered by the target base station in the target network slice subnet indicated by the identifier of the target network slice subnet.

Specifically, the receiving module of the NSMF in FIG. 8 may perform step descriptions of receiving and performing by the PLMN NSMF in FIG. 4 or FIG. 5, for example, step 404, step 406, step 501, or step 503. The processing module 802 may perform a determining-related step of the PLMN NSMF in FIG. 4 or FIG. 5. The sending module 803 may perform sending-related steps of the PLMN NSMF in FIG. 4 or FIG. 5, for example, step 405 or step 502.

FIG. 9 is a schematic diagram of a structure of a source network slice subnet management function device (specifically, an NSMF device 103) according to an embodiment of this application.

A receiving module 901 is configured to receive a resource requirement request sent by a target network slice subnet management function device, where the resource requirement request carries determined information about a target network slice subnet, and the information about the target network slice subnet includes an identifier of the target network slice subnet, information about a target base station, and information about a target cell, and the information about the target network slice subnet is determined based on information about a source network slice subnet. A sending module 902 is configured to send a response to a resource requirement request, where the response to the resource requirement request carries the information about the target network slice subnet, and the information about the target network slice subnet is used to indicate the source network slice subnet management function device to trigger a source base station to hand over to-be-handed-over user equipment from a cell covered by the source base station to a cell that is covered by the target base station in the target network slice subnet indicated by the identifier of the target network slice subnet.

A processing module is configured to determine a quantity of resources provided by the target cell and/or a performance assurance capability provided by the target cell based on a performance requirement of the target network slice subnet, where the performance assurance capability provided by the target cell includes a throughput capability, a packet loss rate capability, and/or a delay capability. The response to the resource requirement request further carries a quantity of resources provided by the target base station and/or a performance assurance capability provided by the target base station, and the quantity of resources provided by the target cell and/or the performance assurance capability provided by the target cell are/is used by the target base station to determine a resource provided in the target network slice subnet.

Specifically, the receiving module 901 of the NSSMF in FIG. 9 may perform the step description of receiving and performing by the PLMN NSSMF in FIG. 4 or FIG. 5, for example, step 405 or step 502. The processing module 902 may perform a determining-related step of the PLMN NSSMF in FIG. 4 or FIG. 5. The sending module 903 may perform a sending-related step of the PLMN NSMF in FIG. 4 or FIG. 5, for example, step 406 or step 503.

FIG. 10 is a schematic diagram of a structure of a source base station (specifically, an NPN RAN) according to an embodiment of this application. A receiving module 1001 is configured to receive second handover configuration information, where the second handover configuration information includes information about a target network slice subnet, the information about the target network slice subnet includes information about a target base station, information about a target cell, and an identifier of the target network slice subnet, and the information about the target network slice subnet is determined based on information about a source network slice subnet. A sending module 1002 is configured to send a handover instruction to the target base station based on the second handover configuration information, so that to-be-handed-over user equipment is handed over from a cell that is covered by a source base station to a cell that is covered by the target base station in the target network slice subnet indicated by the identifier of the target network slice subnet.

It should be understood that a device and a module corresponding to FIG. 7 to FIG. 10 are configured to implement related functions of the source NSMF device, the target NSMF device, the source base station, or the target NSSMF device in the foregoing embodiments. Details are not described again. In addition, these modules of the device may implement the functions of the source NSMF device, the source base station, the target NSMF device, or the target NSSMF device in the foregoing plurality of embodiments at the same time.

In this embodiment, the source NSMF device, the source base station, the target NSMF device, or the target NSSMF device is presented in a form of a functional module. The "module" herein may be an ASIC, a circuit, a processor and a memory that execute one or more software programs or firmware programs, an integrated logic circuit, and/or another component that can provide the foregoing functions. In a simple embodiment, a person skilled in the art may figure out that an NSMF device 104 may be implemented in a form shown in FIG. 9. For example, a function of determining, by the processing module 602, the performance assurance policy of the network slice based on the requirement of the network slice may be implemented by the processor 601 by executing the code stored in the memory 602.

In the descriptions of this application, "/" represents an "or" relationship between associated objects unless otherwise specified. For example, A/B may represent A or B. The term "and/or" in this application represents only an association relationship for describing associated objects and represents that three relationships may exist. For example, A and/or B may represent the following three cases: Only A exists, both A and B exist, and only B exists, where A and B may be singular or plural.

A person of ordinary skill in the art may be aware that, in combination with the examples described in embodiments disclosed in this specification, modules and algorithm steps can be implemented by electronic hardware, computer software, or a combination thereof. To clearly describe the interchangeability between hardware and software, the foregoing has generally described compositions and steps of the examples based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments covered in this application, it should be understood that the disclosed system, device, and method may be implemented in other manners. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces, and the indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on actual requirements to achieve the objectives of the solutions in embodiments of this application.

In addition, the functional modules in the embodiments of this application may be implemented in a form of hardware, or may be implemented in a form of a software functional module. When these functional modules are implemented in the form of software functional module and sold or used as independent products, the functional modules may be stored in a computer-readable storage medium. Based on such an understanding, the technical solutions of this application essentially, or a part contributing to the conventional technology, or all or some of the technical solutions may be embodied in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable device. The computer program product may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A network handover method, applied to a network slice management function, NSMF, device (102), wherein the method comprises:
sending (301) a resource request to a target network slice management function device (102-1), wherein the resource request carries information about a source network slice subnet, and the resource request is used to request to provide a resource in a target network slice subnet;
receiving (302) a response to the resource request sent by the target network slice management function device, wherein the response to the resource request comprises information about the target network slice subnet, the information about the target network slice subnet comprises an identifier of the target network slice subnet, information about a target base station (2), and/or information about a target cell, and the information about the target network slice subnet is determined based on the information about the source network slice subnet; and
sending (303) a handover configuration message to a source network slice subnet management function device (103), wherein the handover configuration message comprises the information about the target network slice subnet, and the information about the target network slice subnet is used to indicate the source network slice subnet management function device to trigger a source base station (1) to hand over to-be-handed-over user equipment from a cell covered by the source base station to a cell that is covered by the target base station in the target network slice subnet indicated by the identifier of the target network slice subnet.

2. The method according to claim 1, wherein the resource request further carries a service level agreement, SLA, requirement of a source network slice and/or a performance requirement of the source network slice subnet, and the SLA requirement of the source network slice and/or the performance requirement of the source network slice subnet are/is used to determine a performance requirement of the target network slice subnet;
the response to the resource request further comprises a quantity of resources provided by the target cell and/or a performance assurance capability provided by the target cell that are/is determined based on the performance requirement of the target network slice subnet, wherein the performance assurance capability provided by the target cell comprises a throughput capability, a packet loss rate capability, a delay capability, and/or a delay jitter capability; and
the handover configuration message further comprises the quantity of resources provided by the target cell and/or the performance assurance capability provided by the target cell, and the quantity of resources provided by the target cell and/or the performance assurance capability provided by the target cell are/is used by the target base station to determine the resource provided in the target network slice subnet.

3. The method according to claim 1, wherein the resource request further carries a requirement for the resource provided by the target network slice subnet, and the requirement for the resource provided by the target network slice subnet comprises a requirement for a quantity of resources provided by the target network slice subnet, a requirement for a time period of the resource provided by the target network slice subnet, a requirement for service traffic provided by the target network slice subnet, and/or a requirement for a carrier frequency provided by the target network slice subnet;
the requirement for the resource provided by the target network slice subnet is used to request a capability of a resource provided by the target cell and/or the target base station, and the capability of the resource provided by the target cell and/or the target base station comprises: a capability of a quantity of uplink and/or downlink resources provided by the target cell and/or the target base station, a capability of service traffic provided by the target cell and/or the target base station, a capability of a time period of the resource provided by the target cell and/or the target base station, and a capability of a carrier frequency provided by the target cell and/or the target base station;
the response to the resource request further comprises the capability of the resource provided by the target cell and/or the target base station, the capability of the resource provided by the target cell and/or the target base station is determined based on the requirement for the resource provided by the target network slice subnet, and the capability of the resource provided by the target cell and/or the target base station comprises: the capability of the quantity of uplink and/or downlink resources provided by the target cell and/or the target base station, the capability of the service traffic provided by the target cell and/or the target base station, the capability of the time period of the resource provided by the target cell and/or the target base station, and the capability of the carrier frequency provided by the target cell and/or the target base station;
the handover configuration message further comprises a capability of the resource provided by the target cell in the target network slice subnet; and
the capability of the resource provided by the target cell in the target network slice subnet is used by the target base station to determine the resource provided by the target cell in the target network slice subnet.

4. The method according to any one of claims 1 to 3, wherein the resource request further carries information about the to-be-handed-over user equipment, and the information about the to-be-handed-over user equipment is used to determine a correspondence between the to-be-handed-over user equipment and the target base station and/or a correspondence between the to-be-handed-over user equipment and the target cell;
the response to the resource request further comprises the correspondence between the to-be-handed-over user equipment and the target base station and/or the correspondence between the to-be-handed-over user equipment and the target cell; and
the handover configuration message further comprises the correspondence between the to-be-handed-over user equipment and the target base station and/or the correspondence between the to-be-handed-over user equipment and the target cell, wherein the correspondence between the to-be-handed-over user equipment and the target base station and/or the correspondence between the to-be-handed-over user equipment and the target cell are/is used to indicate to hand over the to-be-handed-over user equipment from the source base station and/or a source cell to the target base station and/or the target cell.

5. The method according to claim 4, wherein the resource request further carries quality of service information of the to-be-handed-over user equipment, and the quality of service information of the to-be-handed-over user equipment is used to determine a quantity of resources provided by the target base station or the target cell for the to-be-handed-over user equipment; and
the correspondence between the to-be-handed-over user equipment and the target base station is a correspondence between the target base station, the to-be-handed-over user equipment, and the quantity of resources provided by the target base station for the to-be-handed-over user equipment, and the correspondence between the target base station, the to-be-handed-over user equipment, and the quantity of resources provided by the target base station for the to-be-handed-over user equipment is used to indicate the quantity of resources provided by the target base station for the to-be-handed-over user equipment.

6. The method according to any one of claims 1 to 5, wherein the resource request further carries a handover cause, and the handover cause is used to determine whether to provide the resource of the target network slice subnet for the to-be-handed-over user equipment.

7. The method according to any one of claims 1 to 6, wherein the method further comprises:
receiving resource utilization and/or a performance indicator of the source network slice subnet; and
determining, based on the resource utilization and/or the performance indicator of the source network slice subnet and a preset condition of the resource utilization and/or a preset condition of the performance indicator, a handover policy for handing over the to-be-handed-over user equipment from the source network slice subnet to the target network slice subnet, wherein the handover policy comprises content carried in the resource request.

8. The method according to any one of claims 1 to 3, wherein the handover configuration message further comprises a handover cause, wherein
the handover cause is used to indicate the source base station to determine whether to trigger to-be-handed-over user equipment that accesses the source network slice subnet to be handed over to the target network slice subnet through the target base station.

9. A network handover method, applied to a target network slice management function, NSMF, device (102-1), wherein the method comprises:
receiving (404) a resource request, wherein the resource request carries information about a source network slice subnet, and the resource request is used to request to provide a resource in a target network slice subnet;
determining (405) information about the target network slice subnet based on the information about the source network slice subnet, wherein the information about the target network slice subnet comprises an identifier of the target network slice subnet, information about a target base station (2), and/or information about a target cell; and
sending (406) a response to the resource request, wherein the response to the resource request comprises the information about the target network slice subnet, and the information about the target network slice subnet is used to indicate a source network slice subnet management function device (103) to trigger a source base station (1) to hand over to-be-handed-over user equipment from a cell covered by the source base station to a cell that is covered by the target base station in the target network slice subnet indicated by the identifier of the target network slice subnet.

10. The method according to claim 9, wherein the resource request further carries a service level agreement, SLA, requirement of a source network slice and/or a performance requirement of the source network slice subnet, and method further comprises:
determining a performance requirement of the target network slice subnet based on the SLA requirement of the source network slice and/or the performance requirement of the source network slice subnet;
sending a resource requirement request to the target network slice subnet management function device, wherein the resource requirement request carries the performance requirement of the target network slice subnet; and
receiving a response to the resource requirement request sent by the target network slice subnet management function device, wherein the response to the resource requirement request comprises a quantity of resources provided by the target base station and/or a performance assurance capability provided by the target base station that are determined based on the performance requirement of the target network slice subnet, and a performance assurance capability provided by the target cell comprises a throughput capability, a packet loss rate capability, a delay capability, and/or a delay jitter capability; and
the response to the resource request further comprises: a quantity of resources provided by the target cell and/or the performance assurance capability provided by the target cell.

11. The method according to claim 9, wherein the resource request further carries a requirement for the resource provided by the target network slice subnet of the source network slice subnet, and the requirement for the resource provided by the target network slice subnet comprises a requirement for a quantity of resources provided by the target network slice subnet, a requirement for a time period of the resource provided by the target network slice subnet, a requirement for service traffic provided by the target network slice subnet, and/or a requirement for a carrier frequency provided by the target network slice subnet; and the method further comprises:
sending a resource requirement request to the target network slice subnet management function device, wherein the resource requirement request comprises the requirement for the resource provided by the target network slice subnet, the requirement for the resource provided by the target network slice subnet is used to request a requirement of a resource provided by the target cell and/or the target base station, and the requirement for the resource provided by the target cell and/or the target base station comprises: a requirement of a quantity of uplink and/or downlink resources provided by the target cell and/or the target base station, a requirement of service traffic provided by the target cell and/or the target base station, a requirement of a time period of the resource provided by the target cell and/or the target base station, and a requirement of a carrier frequency provided by the target cell and/or the target base station;
receiving a response to the resource requirement request sent by the target network slice subnet, wherein the response to the resource requirement request comprises a capability of the resource provided by the target cell and/or the target base station in the target network slice subnet, and the capability of the resource provided by the target cell and/or the target base station in the target network slice subnet is determined based on the requirement for the resource provided by the target network slice subnet; and the capability of the resource provided by the target cell and/or the target base station in the target network slice subnet comprises: a capability of the quantity of uplink and/or downlink resources provided by the target cell and/or the target base station, a capability of the service traffic provided by the target cell and/or the target base station, a capability of the time period of the resource provided by the target cell and/or the target base station, and a capability of the carrier frequency provided by the target cell and/or the target base station; and
the response to the resource request further comprises a capability of the resource provided by the target cell in the target network slice subnet, and the capability of the resource provided by the target cell in the target network slice subnet is used by the target base station to determine the resource provided by the target cell in the target network slice subnet.

12. The method according to any one of claims 9 to 11, wherein the resource request further carries information about the to-be-handed-over user equipment, and the method further comprises:
sending the resource requirement request to the target network slice subnet management function device, wherein the resource requirement request comprises the information about the to-be-handed-over user equipment, and the information about the to-be-handed-over user equipment is used to determine a correspondence between the to-be-handed-over user equipment and the target base station and/or a correspondence between the to-be-handed-over user equipment and the target cell;
receiving the response to the resource requirement request sent by the target network slice subnet management function device, wherein the response to the resource requirement request further comprises the correspondence between the to-be-handed-over user equipment and the target base station and/or the correspondence between the to-be-handed-over user equipment and the target cell; and
the response to the resource request further comprises the correspondence between the to-be-handed-over user equipment and the target base station and/or the correspondence between the to-be-handed-over user equipment and the target cell.

13. The method according to claim 12, wherein the resource request further carries quality of service information of the to-be-handed-over user equipment;
the resource requirement request further comprises the quality of service information of the to-be-handed-over user equipment, and the quality of service information of the to-be-handed-over user equipment is used to determine a quantity of resources provided by the target base station for the to-be-handed-over user equipment; and
the correspondence between the to-be-handed-over user equipment and the target base station is a correspondence between the target base station, the to-be-handed-over user equipment, and the quantity of resources provided by the target base station for the to-be-handed-over user equipment, and the correspondence between the target base station, the to-be-handed-over user equipment, and the quantity of resources provided by the target base station for the to-be-handed-over user equipment is used to indicate the quantity of resources provided by the target base station for the to-be-handed-over user equipment.

14. A network slice management system, comprising:
a source network slice management function device (102) that is configured to perform the method according to any one of claims 1-8, and a target network slice management function device (102-1) that is configured to perform the method according to any one of claims 9-13.

15. A network slice management function device comprising a processor and a memory (601), wherein the memory (602) is configured to store a computer program, and the processor is configured to invoke and run a computer medium stored in the memory, to perform the method according to any one of claims 1 to 13.

## Patentansprüche

1. Netzwerkübergabeverfahren, das auf eine Netzwerkpartitions-Verwaltungsfunktionsvorrichtung, NSMF-Vorrichtung, (102) angewendet wird, wobei das Verfahren Folgendes umfasst:
Senden (301) einer Ressourcenanforderung an eine Ziel-Netzwerkpartitions-Verwaltungsfunktionsvorrichtung (102-1), wobei die Ressourcenanforderung Informationen über ein Quell-Netzwerkpartitions-Teilnetz trägt und die Ressourcenanforderung dazu verwendet wird, ein Bereitstellen einer Ressource in einem Ziel-Netzwerkpartitions-Teilnetz anzufordern;
Empfangen (302) einer Antwort auf die Ressourcenanforderung, die durch die Ziel-Netzwerkpartitions-Verwaltungsfunktionsvorrichtung gesendet wurde, wobei die Antwort auf die Ressourcenanforderung Informationen über das Ziel-Netzwerkpartitions-Teilnetz umfasst, die Informationen über das Ziel-Netzwerkpartitions-Teilnetz eine Kennung des Ziel-Netzwerkpartitions-Teilnetzes, Informationen über eine Zielbasisstation (2) und/oder Informationen über eine Zielzelle umfassen und die Informationen über das Ziel-Netzwerkpartitions-Teilnetz basierend auf den Informationen über das Quell-Netzwerkpartitions-Teilnetz bestimmt werden; und
Senden (303) einer Übergabekonfigurationsnachricht an eine Quell-Netzwerkpartitions-Teilnetz-Verwaltungsfunktionsvorrichtung (103), wobei die Übergabekonfigurationsnachricht die Informationen über das Ziel-Netzwerkpartitions-Teilnetz umfasst und die Informationen über das Ziel-Netzwerkpartitions-Teilnetz dazu verwendet werden, der Quell-Netzwerkpartitions-Teilnetz-Verwaltungsfunktionsvorrichtung anzuzeigen, eine Quellbasisstation (1) zu veranlassen, eine zu übergebende Benutzerausrüstung von einer Zelle, die durch die Quellbasisstation abgedeckt ist, an eine Zelle, die durch die Zielbasisstation in dem Ziel-Netzwerkpartitions-Teilnetz abgedeckt ist, das durch die Kennung des Ziel-Netzwerkpartitions-Teilnetz angezeigt wird, zu übergeben.

2. Verfahren nach Anspruch 1, wobei die Ressourcenanforderung ferner eine Dienstgütevereinbarungsbedingung, SLA-Bedingung, einer Quell-Netzwerkpartition und/oder eine Leistungsbedingung des Quell-Netzwerkpartitions-Teilnetzes trägt und die SLA-Bedingung der Quell-Netzwerkpartition und/oder die Leistungsbedingung des Quell-Netzwerkpartitions-Teilnetzes dazu verwendet wird/werden, eine Leistungsbedingung des Ziel-Netzwerkpartitions-Teilnetzes zu bestimmen;
die Antwort auf die Ressourcenanforderung ferner eine Menge von Ressourcen, die durch die Zielzelle bereitgestellt wird, und/oder eine Leistungssicherungsfähigkeit, die durch die Zielzelle bereitgestellt wird, umfasst, die basierend auf der Leistungsbedingung des Ziel-Netzwerkpartitions-Teilnetzes bestimmt wird/werden, wobei die Leistungssicherungsfähigkeit, die durch die Zielzelle bereitgestellt wird, eine Durchsatzfähigkeit, eine Paketverlustratenfähigkeit, eine Verzögerungsfähigkeit und/oder eine Verzögerungs-Jitter-Fähigkeit umfasst; und
die Übergabekonfigurationsnachricht ferner die Menge von Ressourcen, die durch die Zielzelle bereitgestellt wird, und/oder die Leistungssicherungsfähigkeit, die durch die Zielzelle bereitgestellt wird, umfasst und die Menge von Ressourcen, die durch die Zielzelle bereitgestellt wird, und/oder die Leistungssicherungsfähigkeit, die durch die Zielzelle bereitgestellt wird, durch die Zielbasisstation dazu verwendet wird/werden, die Ressourcen, die in dem Ziel-Netzwerkpartitions-Teilnetz bereitgestellt werden, zu bestimmen.

3. Verfahren nach Anspruch 1, wobei die Ressourcenanforde-rung ferner eine Bedingung für die Ressource, die durch das Ziel-Netzwerkpartitions-Teilnetz bereitgestellt wird, trägt und die Bedingung für die Ressource, die durch das Ziel-Netzwerkpartitions-Teilnetz bereitgestellt wird, eine Bedingung für eine Menge von Ressourcen, die durch das Ziel-Netzwerkpartitions-Teilnetz bereitgestellt wird, eine Bedingung für einen Zeitraum der Ressource, die durch das Ziel-Netzwerkpartitions-Teilnetz bereitgestellt wird, eine Bedingung für einen Dienstverkehr, der durch das Ziel-Netzwerkpartitions-Teilnetz bereitgestellt wird, und/oder eine Bedingung für eine Trägerfrequenz, die durch das Ziel-Netzwerkpartitions-Teilnetz bereitgestellt wird, umfasst;
die Bedingung für die Ressource, die durch das Ziel-Netzwerkpartitions-Teilnetz bereitgestellt wird, dazu verwendet wird, eine Fähigkeit einer Ressource, die durch die Zielzelle und/oder die Zielbasisstation bereitgestellt wird, anzufordern, und die Fähigkeit der Ressource, die durch die Zielzelle und/oder die Zielbasisstation bereitgestellt wird, Folgendes umfasst: eine Fähigkeit einer Menge von Uplink- und/oder Downlink-Ressourcen, die durch die Zielzelle und/oder die Zielbasisstation bereitgestellt werden, eine Fähigkeit eines Dienstverkehrs, der durch die Zielzelle und/oder die Zielbasisstation bereitgestellt wird, eine Fähigkeit eines Zeitraums der Ressource, die durch die Zielzelle und/oder die Zielbasisstation bereitgestellt wird, und eine Fähigkeit einer Trägerfrequenz, die durch die Zielzelle und/oder die Zielbasisstation bereitgestellt wird;
die Antwort auf die Ressourcenanforderung ferner die Fähigkeit der Ressource, die durch die Zielzelle und/oder die Zielbasisstation bereitgestellt wird, umfasst, wobei die Fähigkeit der Ressource, die durch die Zielzelle und/oder die Zielbasisstation bereitgestellt wird, basierend auf der Bedingung für die Ressource, die durch das Ziel-Netzwerkpartitions-Teilnetz bereitgestellt wird, bestimmt wird und die Fähigkeit der Ressource, die durch die Zielzelle und/oder die Zielbasisstation bereitgestellt wird, Folgendes umfasst: die Fähigkeit einer Menge von Uplink- und/oder Downlink-Ressourcen, die durch die Zielzelle und/oder die Zielbasisstation bereitgestellt werden, die Fähigkeit des Dienstverkehrs, der durch die Zielzelle und/oder die Zielbasisstation bereitgestellt wird, die Fähigkeit des Zeitraums der Ressource, die durch die Zielzelle und/oder die Zielbasisstation bereitgestellt wird, und die Fähigkeit der Trägerfrequenz, die durch die Zielzelle und/oder die Zielbasisstation bereitgestellt wird;
die Übergabekonfigurationsnachricht ferner eine Fähigkeit der Ressource, die durch die Zielzelle in dem Ziel-Netzwerkpartitions-Teilnetz bereitgestellt wird, umfasst; und die Fähigkeit der Ressource, die durch die Zielzelle in dem Ziel-Netzwerkpartitions-Teilnetz bereitgestellt wird, durch die Zielbasisstation dazu verwendet wird, die Ressource, die durch die Zielzelle in dem Ziel-Netzwerkpartitions-Teilnetz bereitgestellt wird, zu bestimmen.

4. Verfahren nach einem der Ansprüche 1 bis 3, wobei die Ressourcenanforderung ferner Informationen über die zu übergebende Benutzerausrüstung trägt und die Informationen über die zu übergebende Benutzerausrüstung dazu verwendet werden, eine Übereinstimmung zwischen der zu übergebenden Benutzerausrüstung und der Zielbasisstation und/oder eine Übereinstimmung zwischen der zu übergebenden Benutzerausrüstung und der Zielzelle zu bestimmen;
die Antwort auf die Ressourcenanforderung ferner die Übereinstimmung zwischen der zu übergebenden Benutzerausrüstung und der Zielbasisstation und/oder die Übereinstimmung zwischen der zu übergebenden Benutzerausrüstung und der Zielzelle umfasst; und
die Übergabekonfigurationsnachricht ferner die Übereinstimmung zwischen der zu übergebenden Benutzerausrüstung und der Zielbasisstation und/oder die Übereinstimmung zwischen der zu übergebenden Benutzerausrüstung und der Zielzelle umfasst, wobei die Übereinstimmung zwischen der zu übergebenden Benutzerausrüstung und der Zielbasisstation und/oder die Übereinstimmung zwischen der zu übergebenden Benutzerausrüstung und der Zielzelle dazu verwendet wird/werden, anzuzeigen, die zu übergebende Benutzerausrüstung von der Quellbasisstation und/oder einer Quellzelle an die Zielbasisstation und/oder die Zielzelle zu übergeben.

5. Verfahren nach Anspruch 4, wobei die Ressourcenanforderung ferner Dienstgüteinformationen des zu übergebenden Benutzerausrüstung trägt und die Dienstgüteinformationen der zu übergebenden Benutzerausrüstung dazu verwendet werden, die Menge der Ressourcen, die durch die Zielbasisstation oder der Zielzelle für die zu übergebende Benutzerausrüstung bereitgestellt werden, zu bestimmen; und
die Übereinstimmung zwischen der zu übergebenden Benutzerausrüstung und der Zielbasisstation eine Übereinstimmung zwischen der Zielbasisstation, der zu übergebenden Benutzerausrüstung und der Menge von Ressourcen, die durch die Zielbasisstation für die zu übergebende Benutzerausrüstung bereitgestellt wird, ist und die Übereinstimmung zwischen der Zielbasisstation, der zu übergebenden Benutzerausrüstung und der Menge von Ressourcen, die durch die Zielbasisstation für die zu übergebende Benutzerausrüstung bereitgestellt wird, dazu verwendet wird, die Menge von Ressourcen, die von der Zielbasisstation für die zu übergebende Benutzerausrüstung bereitgestellt wird, anzuzeigen.

6. Verfahren nach einem der Ansprüche 1 bis 5, wobei die Ressourcenanforderung ferner einen Übergabegrund trägt und der Übergabegrund dazu verwendet wird, zu bestimmen, ob die Ressource des Ziel-Netzwerkpartitions-Teilnetzes für die zu übergebende Benutzerausrüstung bereitzustellen ist.

7. Verfahren nach einem der Ansprüche 1 bis 6, wobei das Verfahren ferner Folgendes umfasst:
Empfangen einer Ressourcennutzung und/oder eines Leistungsindikators des Quell-Netzwerkpartitions-Teilnetzes; und
Bestimmen, basierend auf der Ressourcennutzung und/oder dem Leistungsindikator des Quell-Netzwerkpartitions-Teilnetzes und einem voreingestellten Zustand der Ressourcennutzung und/oder einem voreingestellten Zustand des Leistungsindikators, einer Übergaberichtlinie zum Übergeben der zu übergebenden Benutzerausrüstung von dem Quell-Netzwerkpartitions-Teilnetz an das Ziel-Netzwerkpartitions-Teilnetz, wobei die Übergaberichtlinie Inhalte, die in der Ressourcenanforderung getragen werden, umfasst.

8. Verfahren nach einem der Ansprüche 1 bis 3, wobei die Übergabekonfigurationsnachricht ferner einen Übergabegrund umfasst, wobei
der Übergabegrund dazu verwendet wird, der Quellbasisstation anzuzeigen, ob eine Übergabe der zu übergebenden Benutzerausrüstung, die auf das Quell-Netzwerkpartitions-Teilnetz zugreift, durch die Zielbasisstation an das Ziel-Netzwerkpartitions-Teilnetz zu veranlassen ist.

9. Netzwerkübergabeverfahren, das auf eine Ziel-Netzwerkpartitions-Verwaltungsfunktionsvorrichtung, NSMF-Vorrichtung, (102-1) angewendet wird, wobei das Verfahren Folgendes umfasst:
Empfangen (404) einer Ressourcenanforderung, wobei die Ressourcenanforderung Informationen über ein Quell-Netzwerkpartitions-Teilnetz trägt und die Ressourcenanforderung dazu verwendet wird, ein Bereitstellen einer Ressource in einem Ziel-Netzwerkpartitions-Teilnetz anzufordern;
Bestimmen (405) von Informationen über das Ziel-Netzwerkpartitions-Teilnetz basierend auf den Informationen über das Quell-Netzwerkpartitions-Teilnetz, wobei die Informationen über das Ziel-Netzwerkpartitions-Teilnetz eine Kennung des Ziel-Netzwerkpartitions-Teilnetzes, Informationen über eine Zielbasisstation (2) und/oder Informationen über eine Zielzelle umfassen; und
Senden (406) einer Antwort auf die Ressourcenanforderung, wobei die Antwort auf die Ressourcenanforderung die Informationen über das Ziel-Netzwerkpartitions-Teilnetz umfasst und die Informationen über das Ziel-Netzwerkpartitions-Teilnetz dazu verwendet werden, einer Quell-Netzwerkpartitions-Teilnetz-Verwaltungsfunktionsvorrichtung (103) anzuzeigen, eine Quellbasisstation (1) zu veranlassen, eine zu übergebende Benutzerausrüstung von einer Zelle, die durch die Quellbasisstation abgedeckt ist, an eine Zelle, die durch die Zielbasisstation in dem Ziel-Netzwerkpartitions-Teilnetz abgedeckt ist, das durch die Kennung des Ziel-Netzwerkpartitions-Teilnetz angezeigt wird, zu übergeben.

10. Verfahren nach Anspruch 9, wobei die Ressourcenanforderung ferner eine Dienstgütevereinbarungsbedingung, SLA-Bedingung, einer Quell-Netzwerkpartition und/oder eine Leistungsbedingung des Quell-Netzwerkpartitions-Teilnetzes trägt und das Verfahren ferner Folgendes umfasst:
Bestimmen einer Leistungsanforderung des Ziel-Netzwerkpartitions-Teilnetzes basierend auf der SLA-Bedingung der Quell-Netzwerkpartition und/oder der Leistungsbedingung des Quell-Netzwerkpartitions-Teilnetzes;
Senden einer Ressourcenbedingungsanforderung an die Ziel-Netzwerkpartitions-Teilnetz-Verwaltungsfunktionsvorrichtung,
wobei die Ressourcenbedingungsanforderung die Leistungsbedingung des Ziel-Netzwerkpartitions-Teilnetzes trägt; und
Empfangen einer Antwort auf die Ressourcenbedingungsanforderung, die von der Ziel-Netzwerkpartitions-Teilnetz-Verwaltungsfunktionsvorrichtung gesendet wurde, wobei die Antwort auf die Ressourcenbedingungsanforderung ferner eine Menge von Ressourcen, die durch die Zielbasisstation bereitgestellt wird, und/oder eine Leistungssicherungsfähigkeit, die durch die Zielbasisstation bereitgestellt wird, umfasst, die basierend auf der Leistungsbedingung des Ziel-Netzwerkpartitions-Teilnetzes bestimmt werden, und eine Leistungssicherungsfähigkeit, die durch die Zielzelle bereitgestellt wird, eine Durchsatzfähigkeit, eine Paketverlustratenfähigkeit, eine Verzögerungsfähigkeit und/oder eine Verzögerungs-Jitter-Fähigkeit umfasst; und
die Antwort auf die Ressourcenanforderung ferner Folgendes umfasst: eine Menge von Ressourcen, die durch die Zielzelle bereitgestellt wird, und/oder die Leistungssicherungsfähigkeit, die durch die Zielzelle bereitgestellt wird.

11. Verfahren nach Anspruch 9, wobei die Ressourcenanforderung ferner eine Bedingung für die Ressource, die durch das Ziel-Netzwerkpartitions-Teilnetz des Quell-Netzwerkpartitions-Teilnetzes bereitgestellt wird, trägt und die Bedingung für die Ressource, die durch das Ziel-Netzwerkpartitions-Teilnetz bereitgestellt wird, eine Bedingung für eine Menge von Ressourcen, die durch das Ziel-Netzwerkpartitions-Teilnetz bereitgestellt wird, eine Bedingung für einen Zeitraum der Ressource, die durch das Ziel-Netzwerkpartitions-Teilnetz bereitgestellt wird, eine Bedingung für einen Dienstverkehr, der durch das Ziel-Netzwerkpartitions-Teilnetz bereitgestellt wird, und/oder eine Bedingung für eine Trägerfrequenz, die durch das Ziel-Netzwerkpartitions-Teilnetz bereitgestellt wird, umfasst; wobei das Verfahren ferner Folgendes umfasst:
Senden einer Ressourcenbedingungsanforderung an die Ziel-Netzwerkpartitions-Teilnetz-Verwaltungsfunktionsvorrichtung, wobei die Ressourcenbedingungsanforderung die Bedingung für die Ressource, die durch das Ziel-Netzwerkpartitions-Teilnetz bereitgestellt wird, umfasst, die Bedingung für die Ressource, die durch das Ziel-Netzwerkpartitions-Teilnetz bereitgestellt wird, dazu verwendet wird, eine Bedingung für eine Ressource, die durch die Zielzelle und/oder die Zielbasisstation bereitgestellt wird, anzufordern, und die Bedingung für die Ressource, die durch die Zielzelle und/oder die Zielbasisstation bereitgestellt wird, Folgendes umfasst: eine Bedingung für eine Menge von Uplink- und/oder Downlink-Ressource, die durch die Zielzelle und/oder die Zielbasisstation bereitgestellt werden, eine Bedingung für einen Dienstverkehr, der durch die Zielzelle und/oder die Zielbasisstation bereitgestellt wird, eine Bedingung für einen Zeitraum der Ressource, die durch die Zielzelle und/oder die Zielbasisstation bereitgestellt wird, und eine Bedingung einer Trägerfrequenz, die durch die Zielzelle und/oder die Zielbasisstation bereitgestellt wird;
Empfangen einer Antwort auf die Ressourcenbedingungsanforderung, die durch das Ziel-Netzwerkpartitions-Teilnetz gesendet wurde, wobei die Antwort auf die Ressourcenbedingungsanforderung eine Fähigkeit der Ressource, die durch die Zielzelle und/oder die Zielbasisstation in dem Ziel-Netzwerkpartitions-Teilnetz bereitgestellt wird, umfasst und die Fähigkeit der Ressource, die durch die Zielzelle und/oder die Zielbasisstation in dem Ziel-Netzwerkpartitions-Teilnetz bereitgestellt wird, basierend auf der Bedingung für die Ressource, die durch das Ziel-Netzwerkpartitions-Teilnetz bereitgestellt wird, bestimmt wird; und die Fähigkeit der Ressource, die durch die Zielzelle und/oder die Zielbasisstation in dem Ziel-Netzwerkpartitions-Teilnetz bereitgestellt wird, Folgendes umfasst: eine Fähigkeit einer Menge von Uplink- und/oder Downlink-Ressourcen, die durch die Zielzelle und/oder die Zielbasisstation bereitgestellt werden, eine Fähigkeit des Dienstverkehrs, der durch die Zielzelle und/oder die Zielbasisstation bereitgestellt wird, eine Fähigkeit des Zeitraums der Ressource, die durch die Zielzelle und/oder die Zielbasisstation bereitgestellt wird, und eine Fähigkeit der Trägerfrequenz, die durch die Zielzelle und/oder die Zielbasisstation bereitgestellt wird; und
die Antwort auf die Ressourcenanforderung ferner eine Fähigkeit der Ressource, die durch die Zielzelle in dem Ziel-Netzwerkpartitions-Teilnetz bereitgestellt wird, umfasst und die Fähigkeit der Ressource, die durch die Zielzelle in dem Ziel-Netzwerkpartitions-Teilnetz bereitgestellt wird, durch die Zielbasisstation dazu verwendet wird, die Ressource, die durch die Zielzelle in dem Ziel-Netzwerkpartitions-Teilnetz bereitgestellt wird, zu bestimmen.

12. Verfahren nach einem der Ansprüche 9 bis 11, wobei die Ressourcenanforderung ferner Informationen über die zu übergebende Benutzerausrüstung trägt und das Verfahren ferner Folgendes umfasst:
Senden der Ressourcenbedingungsanforderung an die Ziel-Netzwerkpartitions-Teilnetz-Verwaltungsfunktionsvorrichtung,
wobei die Ressourcenbedingungsanforderung die Informationen über die zu übergebende Benutzerausrüstung umfasst und die Informationen über die zu übergebende Benutzerausrüstung dazu verwendet werden, eine Übereinstimmung zwischen der zu übergebenden Benutzerausrüstung und der Zielbasisstation und/oder eine Übereinstimmung zwischen der zu übergebenden Benutzerausrüstung und der Zielzelle zu bestimmen;
Empfangen der Antwort auf die Ressourcenbedingungsanforderung, die durch die Ziel-Netzwerkpartitions-Teilnetz-Verwaltungsfunktionsvorrichtung gesendet wurde, wobei die Antwort auf die Ressourcenbedingungsanforderung ferner die Übereinstimmung zwischen der zu übergebenden Benutzerausrüstung und der Zielbasisstation und/oder die Übereinstimmung zwischen der zu übergebenden Benutzerausrüstung und der Zielzelle umfasst; und
die Antwort auf die Ressourcenanforderung ferner die Übereinstimmung zwischen der zu übergebenden Benutzerausrüstung und der Zielbasisstation und/oder die Übereinstimmung zwischen der zu übergebenden Benutzerausrüstung und der Zielzelle umfasst.

13. Verfahren nach Anspruch 12, wobei die Ressourcenanforderung ferner Dienstqualitätsinformationen der zu übergebenden Benutzerausrüstung trägt;
wobei die Ressourcenbedingungsanforderung ferner die Dienstgüteinformationen des zu übergebenden Benutzerausrüstung umfasst und die Dienstgüteinformationen der zu übergebenden Benutzerausrüstung dazu verwendet werden, die Menge der Ressourcen, die durch die Zielbasisstation für die zu übergebende Benutzerausrüstung bereitgestellt wird, zu bestimmen; und
die Übereinstimmung zwischen der zu übergebenden Benutzerausrüstung und der Zielbasisstation eine Übereinstimmung zwischen der Zielbasisstation, der zu übergebenden Benutzerausrüstung und der Menge von Ressourcen, die durch die Zielbasisstation für die zu übergebende Benutzerausrüstung bereitgestellt wird, ist und die Übereinstimmung zwischen der Zielbasisstation, der zu übergebenden Benutzerausrüstung und der Menge von Ressourcen, die durch die Zielbasisstation für die zu übergebende Benutzerausrüstung bereitgestellt wird, dazu verwendet wird, die Menge von Ressourcen, die von der Zielbasisstation für die zu übergebende Benutzerausrüstung bereitgestellt wird, anzuzeigen.

14. Netzwerkpartitions-Verwaltungssystem, umfassend:
eine Quell-Netzwerkpartitions-Verwaltungsfunktionsvorrichtung (102), die dazu konfiguriert ist, das Verfahren nach einem der Ansprüche 1-8 durchzuführen, und eine Ziel-Netzwerkpartitions-Verwaltungsfunktionsvorrichtung (102-1), die dazu konfiguriert ist, das Verfahren nach einem der Ansprüche 9-13 durchzuführen.

15. Netzwerkpartitions-Verwaltungsfunktionsvorrichtung, umfassend einen Prozessor und einen Speicher (601), wobei der Speicher (602) dazu konfiguriert ist, ein Computerprogramm zu speichern, und der Prozessor dazu konfiguriert ist, ein Computermedium, das in dem Speicher gespeichert ist, aufzurufen und auszuführen, um das Verfahren nach einem der Ansprüche 1 bis 13 durchzuführen.

## Revendications

1. Procédé de transfert intercellulaire de réseau, appliqué à un dispositif de fonction de gestion de tranches de réseau, NSMF, (102), dans lequel le procédé comprend :
l'envoi (301) d'une demande de ressources à un dispositif de fonction de gestion de tranches de réseau cible (102-1), dans lequel la demande de ressources contient des informations sur un sous-réseau de tranches de réseau source, et la demande de ressources est utilisée pour demander de fournir une ressource dans un sous-réseau de tranches de réseau cible ;
la réception (302) d'une réponse à la demande de ressources envoyée par le dispositif de fonction de gestion de tranches de réseau cible, dans lequel la réponse à la demande de ressources comprend des informations sur le sous-réseau de tranches de réseau cible, les informations sur le sous-réseau de tranches de réseau cible comprennent un identifiant du sous-réseau de tranches de réseau cible, des informations sur une station de base cible (2), et/ou des informations sur une cellule cible, et les informations sur le sous-réseau de tranches de réseau cible sont déterminées sur la base des informations sur le sous-réseau de tranches de réseau source ; et
l'envoi (303) d'un message de configuration de transfert intercellulaire à un dispositif de fonction de gestion de sous-réseau de tranches de réseau source (103), dans lequel le message de configuration de transfert intercellulaire comprend les informations sur le sous-réseau de tranches de réseau cible, et les informations sur le sous-réseau de tranches de réseau cible sont utilisées pour indiquer au dispositif de fonction de gestion de sous-réseau de tranches de réseau source de déclencher une station de base source (1) pour transférer un équipement utilisateur à transférer d'une cellule couverte par la station de base source à une cellule qui est couverte par la station de base cible dans le sous-réseau de tranches de réseau cible indiqué par l'identifiant du sous-réseau de tranches de réseau cible.

2. Procédé selon la revendication 1, dans lequel la demande de ressources contient également une exigence d'accord de niveau de service, SLA, d'une tranche de réseau source et/ou une exigence de performance du sous-réseau de tranches de réseau source, et l'exigence SLA de la tranche de réseau source et/ou l'exigence de performance du sous-réseau de tranches de réseau source est/sont utilisée(s) pour déterminer une exigence de performance du sous-réseau de tranches de réseau cible ;
la réponse à la demande de ressources comprend également une quantité de ressources fournies par la cellule cible et/ou une capacité d'assurance de performance fournie par la cellule cible qui est/sont déterminée(s) sur la base des exigences de performance du sous-réseau de tranches de réseau cible, dans lequel la capacité d'assurance de performance fournie par la cellule cible comprend une capacité de débit, une capacité de taux de perte de paquets, une capacité de retard, et/ou une capacité de gigue de retard ; et
le message de configuration de transfert intercellulaire comprend également la quantité de ressources fournies par la cellule cible et/ou la capacité d'assurance de performance fournie par la cellule cible, et la quantité de ressources fournies par la cellule cible et/ou la capacité d'assurance de performance fournie par la cellule cible est/sont utilisée(s) par la station de base cible pour déterminer la ressource fournie dans le sous-réseau de tranches de réseau cible.

3. Procédé selon la revendication 1, dans lequel la demande de ressources contient également une exigence pour la ressource fournie par le sous-réseau de tranches de réseau cible, et l'exigence pour la ressource fournie par le sous-réseau de tranches de réseau cible comprend une exigence pour une quantité de ressources fournies par le sous-réseau de tranches de réseau cible, une exigence pour une période de temps de la ressource fournie par le sous-réseau de tranches de réseau cible, une exigence pour le trafic de service fourni par le sous-réseau de tranches de réseau cible, et/ou une exigence pour une fréquence porteuse fournie par le sous-réseau de tranches de réseau cible ;
l'exigence pour la ressource fournie par le sous-réseau de tranches de réseau cible est utilisée pour demander une capacité d'une ressource fournie par la cellule cible et/ou la station de base cible, et la capacité de la ressource fournie par la cellule cible et/ou la station de base cible comprend : une capacité d'une quantité de ressources de liaison montante et/ou de liaison descendante fournie par la cellule cible et/ou la station de base cible, une capacité de trafic de service fournie par la cellule cible et/ou la station de base cible, une capacité d'une période de temps de la ressource fournie par la cellule cible et/ou la station de base cible, et une capacité d'une fréquence porteuse fournie par la cellule cible et/ou la station de base cible ;
la réponse à la demande de ressources comprend également la capacité de la ressource fournie par la cellule cible et/ou la station de base cible, la capacité d'une ressource fournie par la cellule cible et/ou la station de base cible est déterminée sur la base de l'exigence pour la ressource fournie par le sous-réseau de tranches de réseau cible, et la capacité de la ressource fournie par la cellule cible et/ou la station de base cible comprend : la capacité de la quantité de ressources de liaison montante et/ou de liaison descendante fournie par la cellule cible et/ou la station de base cible, la capacité du trafic de service fournie par la cellule cible et/ou la station de base cible, la capacité de la période de temps de la ressource fournie par la cellule cible et/ou la station de base cible, et la capacité de la fréquence porteuse fournie par la cellule cible et/ou la station de base cible ;
le message de configuration de transfert intercellulaire comprend également une capacité de la ressource fournie par la cellule cible dans le sous-réseau de tranches de réseau cible ; et
la capacité de la ressource fournie par la cellule cible dans le sous-réseau de tranches de réseau cible est utilisée par la station de base cible pour déterminer la ressource fournie par la cellule cible dans le sous-réseau de tranches de réseau cible.

4. Procédé selon l'une quelconque des revendications 1 à 3, dans lequel la demande de ressources contient également des informations sur l'équipement utilisateur à transférer, et les informations sur l'équipement utilisateur à transférer sont utilisées pour déterminer une correspondance entre l'équipement utilisateur à transférer et la station de base cible et/ou une correspondance entre l'équipement utilisateur à transférer et la cellule cible ;
la réponse à la demande de ressources comprend également la correspondance entre l'équipement utilisateur à transférer et la station de base cible et/ou la correspondance entre l'équipement utilisateur à transférer et la cellule cible ; et
le message de configuration de transfert intercellulaire comprend également la correspondance entre l'équipement utilisateur à transférer et la station de base cible et/ou la correspondance entre l'équipement utilisateur à transférer et la cellule cible, dans lequel la correspondance entre l'équipement utilisateur à transférer et la station de base cible et/ou la correspondance entre l'équipement utilisateur à transférer et la cellule cible est/sont utilisée(s) pour indiquer de transférer l'équipement utilisateur à transférer de la station de base source et/ou d'une cellule source à la station de base cible et/ou à la cellule cible.

5. Procédé selon la revendication 4, dans lequel la demande de ressources contient également des informations sur la qualité de service de l'équipement utilisateur à transférer, et les informations sur la qualité de service de l'équipement utilisateur à transférer sont utilisées pour déterminer une quantité de ressources fournies par la station de base cible ou la cellule cible pour l'équipement utilisateur à transférer ; et
la correspondance entre l'équipement utilisateur à transférer et la station de base cible est une correspondance entre la station de base cible, l'équipement utilisateur à transférer, et la quantité de ressources fournies par la station de base cible pour l'équipement utilisateur à transférer, et la correspondance entre la station de base cible, l'équipement utilisateur à transférer, et la quantité de ressources fournies par la station de base cible pour l'équipement utilisateur à transférer est utilisée pour indiquer la quantité de ressources fournies par la station de base cible pour l'équipement utilisateur à transférer.

6. Procédé selon l'une quelconque des revendications 1 à 5, dans lequel la demande de ressources contient également une cause de transfert intercellulaire, et la cause de transfert intercellulaire est utilisée pour déterminer s'il faut fournir la ressource du sous-réseau de tranches de réseau cible pour l'équipement utilisateur à transférer.

7. Procédé selon l'une quelconque des revendications 1 à 6, dans lequel le procédé comprend également :
la réception de l'utilisation des ressources et/ou d'un indicateur de performance du sous-réseau de la tranche de réseau source ; et
la détermination, sur la base de l'utilisation des ressources et/ou de l'indicateur de performance du sous-réseau de tranches de réseau source et d'une condition prédéfinie de l'utilisation des ressources et/ou d'une condition prédéfinie de l'indicateur de performance, d'une politique de transfert intercellulaire pour transférer l'équipement utilisateur à transférer du sous-réseau de tranches de réseau source au sous-réseau de tranches de réseau cible, dans lequel la politique de transfert intercellulaire comprend le contenu présent dans la demande de ressources.

8. Procédé selon l'une quelconque des revendications 1 à 3, dans lequel le message de configuration de transfert intercellulaire comprend également une cause de transfert intercellulaire, dans lequel
la cause de transfert intercellulaire est utilisée pour indiquer à la station de base source de déterminer s'il faut déclencher l'équipement utilisateur à transférer qui accède au sous-réseau de tranches de réseau source pour qu'il soit transféré au sous-réseau de tranches de réseau cible via la station de base cible.

9. Procédé de transfert intercellulaire de réseau, appliqué à un dispositif de fonction de gestion de tranches de réseau, NSMF, (102-1), dans lequel le procédé comprend :
la réception (404) d'une demande de ressources, dans lequel la demande de ressources contient des informations sur un sous-réseau de tranches de réseau source, et la demande de ressources est utilisée pour demander la fourniture d'une ressource dans un sous-réseau de tranches de réseau cible ;
la détermination (405) d'informations sur le sous-réseau de tranches de réseau cible sur la base des informations sur le sous-réseau de tranches de réseau source, dans lequel les informations sur le sous-réseau de tranches de réseau cible comprennent un identifiant du sous-réseau de tranches de réseau cible, des informations sur une station de base cible (2) et/ou des informations sur une cellule cible ; et
l'envoi (406) d'une réponse à la demande de réponse, dans lequel la réponse à la demande de réponse comprend les informations sur le sous-réseau de tranches de réseau cible, et les informations sur le sous-réseau de tranches de réseau cible sont utilisées pour indiquer à un dispositif de fonction de gestion de sous-réseau de tranches de réseau source (103) de déclencher une station de base source (1) pour transférer un équipement utilisateur à transférer d'une cellule couverte par la station de base source à une cellule qui est couverte par la station de base cible dans le sous-réseau de tranches de réseau cible indiqué par l'identifiant du sous-réseau de tranches de réseau cible.

10. Procédé selon la revendication 9, dans lequel la demande de ressources contient également une exigence d'accord de niveau de service, SLA, d'une tranche de réseau source et/ou une exigence de performance du sous-réseau de la tranche de réseau source, et le procédé comprend également :
la détermination d'une exigence de performance du sous-réseau de tranches de réseau cible sur la base de l'exigence SLA de la tranche de réseau source et/ou de l'exigence de performance du sous-réseau de tranches de réseau source ;
l'envoi d'une demande d'exigence de ressources au dispositif de fonction de gestion de sous-réseau de tranches de réseau cible, dans lequel la demande d'exigence de ressources contient l'exigence de performance du sous-réseau de tranches de réseau cible ; et
la réception d'une réponse à la demande d'exigence de ressources envoyée par le dispositif de fonction de gestion de sous-réseau de tranches de réseau cible, dans lequel la réponse à la demande d'exigence de ressources comprend une quantité de ressources fournie par la station de base cible et/ou une capacité d'assurance de performance fournie par la station de base cible qui sont déterminées sur la base de l'exigence de performance du sous-réseau de tranches de réseau cible, et une capacité d'assurance de performance fournie par la cellule cible comprend une capacité de débit, une capacité de taux de perte de paquets, une capacité de retard et/ou une capacité de gigue de retard ; et
la réponse à la demande de ressources comprend également : une quantité de ressources fournie par la cellule cible et/ou la capacité d'assurance de performance fournie par la cellule cible.

11. Procédé selon la revendication 9, dans lequel la demande de ressources contient également une exigence pour la ressource fournie par le sous-réseau de tranches de réseau cible du sous-réseau de tranches de réseau source, et l'exigence pour la ressource fournie par le sous-réseau de tranches de réseau cible comprend une exigence pour une quantité de ressources fournies par le sous-réseau de tranches de réseau cible, une exigence pour une période de temps de la ressource fournie par le sous-réseau de tranches de réseau cible, une exigence pour le trafic de service fourni par le sous-réseau de tranches de réseau cible, et/ou une exigence pour une fréquence porteuse fournie par le sous-réseau de tranches de réseau cible ; et le procédé comprend également :
l'envoi d'une demande d'exigence de ressources au dispositif de fonction de gestion de sous-réseau de tranches de réseau cible, dans lequel la demande d'exigence de ressources comprend l'exigence pour la ressource fournie par le sous-réseau de tranches de réseau cible, l'exigence pour la ressource fournie par le sous-réseau de tranches de réseau cible est utilisée pour demander une exigence d'une ressource fournie par la cellule cible et/ou la station de base cible, et l'exigence pour la ressource fournie par la cellule cible et/ou la station de base cible comprend : une exigence d'une quantité de ressources de liaison montante et/ou de liaison descendante fournie par la cellule cible et/ou la station de base cible, une exigence en trafic de service fournie par la cellule cible et/ou la station de base cible, une exigence d'une période de temps de la ressource fournie par la cellule cible et/ou la station de base cible, et une exigence en fréquence porteuse fournie par la cellule cible et/ou la station de base cible ;
la réception d'une réponse à la demande d'exigence de ressources envoyée par le sous-réseau de tranches de réseau cible, dans lequel la réponse à la demande d'exigence de ressources comprend une capacité de la ressource fournie par la cellule cible et/ou la station de base cible dans le sous-réseau de tranches de réseau cible, et la capacité de la ressource fournie par la cellule cible et/ou la station de base cible dans le sous-réseau de tranches de réseau cible est déterminée sur la base de l'exigence pour la ressource fournie par le sous-réseau de tranches de réseau cible ; et la capacité de la ressource fournie par la cellule cible et/ou la station de base cible dans le sous-réseau de tranches de réseau cible comprend : une capacité de la quantité de ressources de liaison montante et/ou de liaison descendante fournie par la cellule cible et/ou la station de base cible, une capacité du trafic de service fournie par la cellule cible et/ou la station de base cible, une capacité de la période de temps de la ressource fournie par la cellule cible et/ou la station de base cible, et une capacité de la fréquence porteuse fournie par la cellule cible et/ou la station de base cible ; et
la réponse à la demande de ressources comprend également une capacité de la ressource fournie par la cellule cible dans le sous-réseau de tranches de réseau cible, et la capacité de la ressource fournie par la cellule cible dans le sous-réseau de tranches de réseau cible est utilisée par la station de base cible pour déterminer la ressource fournie par la cellule cible dans le sous-réseau de tranches de réseau cible.

12. Procédé selon l'une quelconque des revendications 9 à 11, dans lequel la demande de ressources contient également des informations sur l'équipement utilisateur à transférer, et le procédé comprend également :
l'envoi de la demande d'exigence de ressources au dispositif de fonction de gestion de sous-réseau de tranches de réseau cible, dans lequel la demande d'exigence de ressources comprend les informations sur l'équipement utilisateur à transférer, et les informations sur l'équipement utilisateur à transférer sont utilisées pour déterminer une correspondance entre l'équipement utilisateur à transférer et la station de base cible et/ou une correspondance entre l'équipement utilisateur à transférer et la cellule cible ;
la réception de la réponse à la demande d'exigence de ressources envoyée par le dispositif de fonction de gestion de sous-réseau de tranches de réseau cible, dans lequel la réponse à la demande d'exigence de ressources comprend également la correspondance entre l'équipement utilisateur à transférer et la station de base cible et/ou la correspondance entre l'équipement utilisateur à transférer et la cellule cible ; et
la réponse à la demande de ressources comprend également la correspondance entre l'équipement utilisateur à transférer et la station de base cible et/ou la correspondance entre l'équipement utilisateur à transférer et la cellule cible.

13. Procédé selon la revendication 12, dans lequel la demande de ressources contient également des informations de qualité de service de l'équipement utilisateur à transférer ;
la demande d'exigence de ressources comprend également des informations sur la qualité de service de l'équipement utilisateur à transférer, et les informations sur la qualité de service de l'équipement utilisateur à transférer sont utilisées pour déterminer une quantité de ressources fournies par la station de base cible pour l'équipement utilisateur à transférer ; et
la correspondance entre l'équipement utilisateur à transférer et la station de base cible est une correspondance entre la station de base cible, l'équipement utilisateur à transférer, et la quantité de ressources fournies par la station de base cible pour l'équipement utilisateur à transférer, et la correspondance entre la station de base cible, l'équipement utilisateur à transférer, et la quantité de ressources fournies par la station de base cible pour l'équipement utilisateur à transférer est utilisée pour indiquer la quantité de ressources fournies par la station de base cible pour l'équipement utilisateur à transférer.

14. Système de gestion de tranches de réseau, comprenant :
un dispositif de fonction de gestion de tranches de réseau source (102) qui est configuré pour réaliser le procédé selon l'une quelconque des revendications 1 à 8, et un dispositif de fonction de gestion de tranches de réseau cible (102-1) qui est configuré pour réaliser le procédé selon l'une quelconque des revendications 9 à 13.

15. Dispositif de fonction de gestion de tranches de réseau comprenant un processeur et une mémoire (601), dans lequel la mémoire (602) est configurée pour stocker un programme informatique, et le processeur est configuré pour invoquer et exécuter un support informatique stocké dans la mémoire, pour réaliser le procédé selon l'une quelconque par les revendications 1 à 13.
